(19) Europäisches Patentamt
European Patent Office
Office européen des brevets

(11) EP 4 168 468 B1

(12) EUROPÄISCHE PATENTSCHRIFT

(45) Veröffentlichungstag und Bekanntmachung des Hinweises auf die Patenterteilung:
**02.04.2025 Patentblatt 2025/14**

(21) Anmeldenummer: **21731180.2**

(22) Anmeldetag: **11.06.2021**

(51) Internationale Patentklassifikation (IPC):
***C08G 63/02*** $^{(2006.01)}$ ***C08G 63/18*** $^{(2006.01)}$
***C08G 63/78*** $^{(2006.01)}$ ***C08G 64/20*** $^{(2006.01)}$
***C08G 64/30*** $^{(2006.01)}$ ***C08L 67/00*** $^{(2006.01)}$
***C08L 69/00*** $^{(2006.01)}$

(52) Gemeinsame Patentklassifikation (CPC):
**C08G 63/64; C08G 63/18; C08G 63/672; C08G 63/78**

(86) Internationale Anmeldenummer:
**PCT/EP2021/065745**

(87) Internationale Veröffentlichungsnummer:
**WO 2021/254894 (23.12.2021 Gazette 2021/51)**

(54) **POLYESTERCARBONATE AUS EINEM DEFINIERTEN VERHÄLTNIS UNTERSCHIEDLICHER DIOLE**

POLYESTER CARBONATES MADE FROM CYCLOALIPHATIC DIACIDS, 1,4 : 3,6-DIANHYDRO-HEXITOLE AND A FURTHER ALIPHATIC DIHYDROXY COMPOUND

CARBONATES DE POLYESTER COMPOSÉS DE DIACIDES CYCLOALIPHATIQUES, DE 1,4: 3,6-DIANHYDROHEXITOL ET D'UN AUTRE COMPOSÉ ALIPHATIQUE DIHYDROXYLÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2020 EP 20181052**
**19.06.2020 EP 20181051**
**19.06.2020 EP 20181053**

(43) Veröffentlichungstag der Anmeldung:
**26.04.2023 Patentblatt 2023/17**

(73) Patentinhaber: **Covestro Deutschland AG**
**51373 Leverkusen (DE)**

(72) Erfinder:
- **MEYER, Alexander**
  **40489 Düsseldorf (DE)**
- **PFINGST, Thomas**
  **47918 Tönisvorst (DE)**
- **SCHULZ, Lukas Fabian**
  **32657 Lemgo (DE)**

(74) Vertreter: **Levpat**
**c/o Covestro AG**
**Gebäude K12**
**51365 Leverkusen (DE)**

(56) Entgegenhaltungen:
**EP-A1- 3 026 074** **WO-A1-2019/093770**
**WO-A1-2020/085686** **US-A1- 2004 092 703**

EP 4 168 468 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Copolyestercarbonate der Strukturformel (1) mit einem definierten Verhältnis an unterschiedlichen Struktureinheiten, welche aus Diolen resultieren, eine Formmasse, ein Formteil sowie ein Verfahren zur Herstellung der entsprechenden Polyestercarbonate.

Es ist bekannt, dass Polyester, Polycarbonate sowie Polyestercarbonate gute Eigenschaften bezüglich Mechanik, Wärmeformbeständigkeit und Bewitterungsbeständigkeit aufweisen. Jede Polymergruppe weist in Abhängigkeit der verwendeten Monomere bestimmte Schlüsselmerkmale auf, durch die sich derartige Materialien auszeichnen. So weisen Polycarbonate insbesondere gute mechanische Eigenschaften auf, wohingegen Polyester häufig eine bessere Chemikalienbeständigkeit zeigen. Polyestercarbonate zeigen in Abhängigkeit der gewählten Monomere Eigenschaftsprofile aus beiden genannten Gruppen.

Aromatische Polycarbonate oder Polyester weisen zwar häufig ein gutes Eigenschaftsprofil auf, zeigen jedoch bzgl. der Alterungs- und Bewitterungsbeständigkeit Schwächen. So kommt es beispielsweise durch Absorption von UV-Licht zur Vergilbung und ggf. Versprödung dieser thermoplastischen Materialien. Aliphatische Polycarbonate und Polyestercarbonate weisen diesbezüglich bessere Eigenschaften, insbesondere bessere Alterungs- und/oder Bewitterungsbeständigkeiten sowie besser optische Eigenschaften (beispielsweise Transmission) auf.

Der Nachteil aliphatischer Polycarbonate oder Polyestercarbonate ist häufig deren geringe Glastemperatur. Deshalb ist es von Vorteil cycloaliphatische Alkohole als (Co)Monomere einzusetzen. Derartige cycloaliphatische Alkohole sind beispielsweise TCD-Alkohol (Tricyclodecandimethanol; 8-(Hydroxymethyl)-3-tricyclo[5.2.1.02,6]decanyl]methanol,), Cyclohexandiol, Cyclohexandimethanol und biobasierte Diole auf Basis von 1,4:3,6-Dianhydrohexitolen wie Isosorbid und den Isomeren Isomannid und Iosidid. Um die Glastemperatur weiter zu erhöhen, können auch cycloaliphatische Säuren wie 1,2, 1,3 oder 1,4 Cyclohexandicarbonsäuren oder entsprechende Naphthalinderivate als (Co)Monomere eingesetzt werden. Man erhält dann je nach Wahl der Reaktanden Polyester oder Polyestercarbonate. Diese Anmeldung betrifft Copolyestercarbonate auf Basis von 1,4:3,6-Dianhydrohexitolen wie Isosorbid bzw. den Isomeren sowie cycloaliphatischen Disäuren, die bestimmte Mengen weiterer Diole enthalten, um verbesserte Eigenschaften zu erzielen. Die Erfindung betrifft ferner ein Verfahren zur Herstellung dieser Copolyestercarbonate, welches sich durch die direkte Umsetzung der Rohstoffe auszeichnet und keine in der Handhabung herausfordernde Rohstoffe wie Phosgen benötigt.

Die Polyester von Cyclohexandicarbonsäure und Isosorbid sind von Oh et al. in Macromolecules 2013, 46, 2930-2940 beschrieben. Ebenso beschreibt die US 2004/0092703 A1 Polyester auf Basis von Isosorbid. Die vorliegende Erfindung ist jedoch bevorzugt auf Polyestercarbonate ausgerichtet.

Polyester werden großtechnisch beispielsweise durch Umesterung entsprechender Ester-haltiger Monomere mit Diolen hergestellt. So wird der Polyester aus 1,4-Cylohexandimethanol und 1,4-Cyclohexandicarbonsäure ausgehend vom Dimethylester der Disäure hergestellt (Blend aus diesem Polyester und Polycarbonat: Xyrex® der DuPont).

Für die Umesterungsreaktion sind Phenylester aber deutlich reaktiver als ihre aliphatischen Analoga. In EP 3026074 A1 und in EP 3248999 A1 werden Verfahren zur Herstellung von Polyestercarbonaten mit Phenylester als Zwischenschritt beschrieben.

In EP 3026074 A1 wird in Beispiel 1 die direkte Reaktion der Disäure mit Phenol zum entsprechenden Ester beschrieben. In Beispiel 2 der EP 3026074 A1 wird ein Dimethylester mit Phenol umgesetzt. Die Ausbeute für beide Varianten der Phenylesterherstellung sind aber noch verbesserungsfähig. Anschließend erfolgt dann die Herstellung des Polyestercarbonats. Das Polyestercarbonat wird nur aus einem Diol hergestellt.

In EP 3248999 A1 wird die Herstellung eines Diphenylesters in einem Lösungsmittel und unter Einsatz von Phosgen beschrieben. Da die anschließende Reaktion zum aliphatischen Polyestercarbonat ohne Phosgen auskommt, ist die Kombination eines Phosgenverfahrens mit einem Umesterungsverfahren in einem Anlagenteil sehr unvorteilhaft. Damit ist das in EP 3248999 A1 beschriebene Verfahren auch nicht optimal und auch hier wird nur ein Diol zur Herstellung des Polymers verwendet. In der WO2020/085686 A1 werden Polyestercarbonate hergestellt aus Isosorbid, Cyclohexandicarbonsäure und einem weiteren Diol, welches beispielsweise Cyclohexandimethanol sein kann. Allerdings werden hier sehr hohe Mengen an Cyclohexandimethanol eingesetzt. Durch zu hohe Mengen an Cyclohexandimethanol werden jedoch die thermischen Eigenschaften des Polymers häufig negativ beeinflusst. Insbesondere sinkt die Glastemperatur drastisch. Auch die WO2019/093770 A1 offenbart Polyestercarbonate mit strukturellen Einheiten abgeleitet von Isosorbid, Cyclohexandimethanol, Diphenylcarbonat und Cyclohexandicarbonsäure.

WO2019/147051 A1 offenbart ein zweistufiges Verfahren, in dem eine zusätzliche Säure wie Terephthalsäure eingesetzt wird. US 2009/105393 A1 offenbart ein Polycarbonat auf Isosorbidbasis, umfassend: eine Isosorbideinheit, eine aliphatische Einheit, die von einer aliphatischen C-14 bis C-44-Disäure, einem aliphatischen C-14 bis 44-Diol oder einer Kombination davon abgeleitet ist; und gegebenenfalls eine zusätzliche Einheit, die sich von den Isosorbid- und den aliphatischen Einheiten unterscheidet, wobei die Isosorbideinheit, die aliphatische Einheit und die zusätzliche Einheit jeweils Carbonate oder eine Kombination von Carbonat- und Estereinheiten sind. Die häufigen Nachteile aliphatischer Polycarbonate oder Polyestercarbonate wurden oben bereits diskutiert. In den Beispielen werden keine Polymere

hergestellt, die von einer Kombination aus Isosorbid, einer cycloaliphatischen Disäure und zusätzlich einem aliphatischen Diol abgeleitet sind. Zudem wird ein aktiviertes Carbonat zur Umesterung eingesetzt.

Die einfache Herstellung von aromatischen Polyestercarbonaten ist beispielsweise in der WO 01/32742 A1 beschrieben. Dort wird eine Direktsynthese oder auch one-pot-Synthese gezeigt, das heißt, eine Synthese, bei der alle das spätere Polyestercarbonat aufbauenden Strukturelemente bereits zu Beginn der Synthese als Monomere anwesend sind. Hier werden als Monomere aromatische Dihydroxyverbindungen wie beispielsweise Bisphenol A, Carbonsäurediester und aromatische oder lineare aliphatische Disäuren eingesetzt. Dadurch, dass in diesem Dokument ausschließlich aromatische Polyestercarbonate hergestellt werden, können bei der Reaktion der Aufkondensation unter Entfernung des entstehenden Phenols Temperaturen von 300 °C verwendet werden. Die Verwendung solcher Temperaturen ist bei der Herstellung von aliphatischen Polyestercarbonaten nicht möglich, da aliphatische Diole bei dieser Temperaturbelastung eliminieren und/oder zu thermischer Zersetzung neigen. Gleichzeitig wird die hohe Temperatur jedoch benötigt, um die gewünschten hohen Molekulargewichte aufzubauen. Hier wird insbesondere die unterschiedliche Reaktivität von aliphatischen und aromatischen Diolen deutlich. Aus der Literatur ist es bekannt, dass beispielsweise Isosorbid selten komplett in ein Polymer einbaut, sondern dass je nach gewählten Reaktionsbedingungen bis zu 25 % des Isosorbids bei der Polymerisationsreaktion verloren werden. Eine Übertragung von Reaktionsbedingungen für aromatische Diole auf aliphatische Diole ist daher nicht ohne Weiteres möglich. Dies wird insbesondere auch daran ersichtlich, dass die Reaktionszeiten der Polykondensation (entspricht Verfahrensschritt (ii)) in der WO01/32742 A1 bei höheren Temperaturen deutlich länger sind als die erfindungsgemäß beobachteten.

Ebenso werden in der JP1992-345616 A und der DE2438053 A1 aromatische Bausteine und entsprechend hohe Temperaturen verwendet. Aus den oben genannten Gründen, ist eine Übertragbarkeit der dortigen Lehren auf aliphatische Bausteine nicht möglich.

In der noch nicht veröffentlichten Anmeldung PCT/EP2019/084847 wird eine one-pot Synthese eines Polyestercarbonats, umfassend eine cycloaliphatische Dicarbonsäure, ein Diarylcarbonat und eine aliphatische Dihydroxyverbindung, offenbart.

Die Polyestercarbonate, welche in EP 3026074 A1 und in EP 3248999 A1 beschrieben sind, weisen hohe Glastemperaturen auf. Allerdings ist die Struktur dieser Polyestercarbonate sehr starr. Dies ist insbesondere eine Folge der in die Polymerkette einkondensierten Isosorbidstruktur. Die bicyclische Teilstruktur erhöht aufgrund des starren Charakters die Glastemperatur - allerdings macht es die Polymerkette sehr unflexibel; dies kann prinzipiell zu Nachteilen führen. Park et al beschreiben, dass durch höhere Mengen Isosorbid im Polymer das Molekulargewicht sinkt (S. A. Park et al. Polymer 2017, 116, 153 - 159; S.155/156). Die Autoren beschreiben, dass durch die hohe Schmelzeviskosität der Molekulargewichtsaufbau verhindert wird. Wird eine kritisches Molekulargewicht nicht erreicht, kann dies zu nicht ausreichenden mechanischen Eigenschaften führen. Dies ist insbesondere bei unflexiblen Polymerketten wichtig. Die starren Ketten benötigen ein relativ hohes Molekulargewicht, um sich verhaken zu können. Ist dies nicht der Fall resultiert ein sprödes Verhalten (kritisches Entanglement-Molekulargewicht).

Die Cyclohexandicarbonsäure erhöht zwar die Flexibilität etwas, jedoch ist die Gesamtstruktur der Polymerkette immer noch recht starr. Dies kann zu Nachteilen während der Herstellung der Polymere führen. Aufgrund des unflexiblen Charakters finden sich die Reaktionspartner (Kettenenden) mit ansteigendem Molekulargewicht schwerer. Damit kommt es wie oben beschrieben zur Begrenzung des Molekulargewichts. Ferner steigt aufgrund des starren Charakters die Viskosität während der Polymersynthese stark an. Um dies zu kompensieren, wird während der Polymerherstellung in der Endphase der Polykondensation häufig die Temperatur erhöht, um eine bessere Fließfähigkeit zu erreichen. Allerdings ist dies bei aliphatischen Polymeren nur eingeschränkt möglich, da die Thermostabilität deutlich geringer ist im Vergleich zu beispielsweise aromatischen Polyestern oder Polycarbonaten. Durch die ansteigende Viskosität, welche nicht durch eine Erhöhung der Temperatur kompensiert werden kann, kommt es zu mangelnden Durchmischung und geringer Oberflächenerneuerung. Damit können Kondensationsprodukte (wie beispielsweise Phenol) nicht mehr abgeführt werden und die Polykondensation bricht ab.

Um eine bessere Oberflächenerneuerung zu erzeugen, wurde in WO2019147051 A1 beschrieben, horizontale Polymerreaktoren wie Polymerkneter einzusetzen. Diese üben hohe Scherkräfte auf das Polymer aus; die Oberflächenerneuerung wird dadurch erhöht und die Polykondensation kann fortgeführt werden. Allerdings stellen die hohen Scherkräfte eine enorme Belastung für das unflexible Polymer dar.

So kann es aufgrund der hohen Scherbelastung zu Schädigungen kommen, was sich in einer Verschlechterung der optischen und mechanischen Eigenschaften bemerkbar machen kann.

Ausgehend von diesem Stand der Technik lag der vorliegenden Erfindung daher die Aufgabe zu Grunde, ein Polyestercarbonat, umfassend mindestens ein 1,4:3,6-Dianhydrohexitol und mindestens eine spezielle cycloaliphatische Dicarbonsäure, bereitzustellen, welches sich durch ausreichend hohe Molekulargewichte auszeichnet. Dabei wird vorzugsweise unter "ausreichend hohe Molekulargewichte" ein Polymer verstanden, welches eine relative Lösungsviskosität oberhalb von 1,20 aufweist, bevorzugt 1,20 bis 1,70, weiter bevorzugt 1,22 bis 1,65 und insbesondere bevorzugt von 1,30 bis 1,62 jeweils gemessen in Dichlormethan bei einer Konzentration von 5 g/l bei 25 °C mit einem Ubbelohdeviskosimeter. Ferner sollten die erfindungsgemäßen Polyestercarbonate somit über bessere Verarbeitungseigenschaften und gute mechanische Eigenschaften verfügen. Diese sollen insbesondere aus der ausreichend hohen Molmasse resultieren. Hohe Molekulargewichte resultieren beispielsweise durch eine bessere Oberflächenerneuerung im Herstellungsprozess.. Des Weiteren bestand die Aufgabe, ein möglichst einfaches Verfahren zur Herstellung von Polyestercarbonate mittels Schmelzeumesterung bereitzustellent. Dabei ist "einfach" insbesondere als ein Verfahren zu verstehen, welches apparativ unaufwendig ist, wenige Stufen, insbesondere Aufreinigungsstufen umfasst und/ oder somit ökonomisch und auch ökologisch vorteilhaft ist. Insbesondere soll das erfindungsgemäße Verfahren ohne in der Handhabung herausfordernde Einsatzstoffe, insbesondere von Phosgen, auskommen.

Mindestens eine, bevorzugt alle der oben genannten Aufgaben wurden durch die vorliegende Erfindung gelöst. Überraschend wurde gefunden, dass die Synthese eines Polyestercarbonats aus mindestens einer cycloaliphatischen Disäure, mindestens einem Diarylcarbonat, mindestens einem 1,4:3,6-Dianhydrohexitol und mindestens einer weiteren aliphatischen Dihydroxy-Verbindung mittels Schmelzeumesterung in einer Direktsynthese oder one-pot-Synthese, bei der alle das spätere Polyestercarbonat aufbauenden Strukturelemente bereits zu Beginn der Synthese als Monomere anwesend sind, möglich ist. Allerdings stellte sich heraus, dass nur wenn eine bestimmte Menge an dem mindestens einen weiteren Diol HO-x-OH eingesetzt wird, ein Polymer mit entsprechender Molmasse und somit auch entsprechenden mechanischen Eigenschaften erhalten wird. Zudem muss dieses mindestens eine weitere Diol bevorzugt mindestens eine Verzweigung aufweisen. Es war zum einen überraschend, dass eine Direktsynthese trotz der im Stand der Technik beschriebenen Vorurteile auch auf die Reaktion einer cycloaliphatischen Dicarbonsäure, einem 1,4:3,6-Dianhydrohexitol und mindestens einer weiteren aliphatischen Dihydroxy-Verbindung HO-x-OH (oder auch erfindungsgemäß "aliphatisches Diol" genannt) und einem Diarylcarbonat funktioniert. Zudem war es vollkommen überraschend, dass das die Menge der mindestens einen weiteren aliphatischen Dihydroxy-Verbindung HO-x-OH wichtig ist, um einen guten Molekulargewichtsaufbau zu erhalten. Auf diese Weise konnte ein Verfahren aufgefunden werden, welches ein Polyestercarbonat aus cycloaliphatischen Disäuren, einem 1,4:3,6-Dianhydrohexitol und mindestens einer weiteren aliphatischen Dihydroxy-Verbindung HO-x-OH zugänglich macht, welches besonders einfach, das heißt, apparativ unaufwendig ist, wenige Stufen, insbesondere Aufreinigungsstufen erfordert und somit ökonomisch und auch ökologisch vorteilhaft ist.

Zudem wurde gefunden, dass der Einbau geringer Mengen zusätzlicher aliphatischer Dihydroxy-Verbindungen HO-x-OH, insbesondere der Einbau von verzweigten aliphatischen Dihydroxy-Verbindungen die Oberflächenerneuerung während der Synthese erhöht. Dabei war es insbesondere überraschend, dass nur bestimmte geringe Mengen an bestimmten Diolen zu guten Eigenschaften führen, wohingegen höhere Mengen überraschend nachteilig sind. Überraschend war, dass schon der Einbau geringer Mengen zusätzlicher Diole die Oberflächenerneuerung und damit das Molekulargewicht deutlich erhöht. Dabei war es insbesondere überraschend, dass verzweigte Diole trotz der sterischen Hinderung gut in die Polymerkette einkondensieren. Der Fachmann hätte erwartet, dass die sterische Hinderung den Molekulargewichtsaufbau behindert. Insgesamt konnten somit Polyestercarbonate bereitgestellt werden, deren aufbauende Strukturelemente zum einen für eine gute Balance zwischen Starrheit und Flexibilität der Polymerketten verantwortlich sind, welche aber zum anderen insgesamt auch ein ausreichend großes Molekulargewicht aufweisen, das zu entsprechend guten mechanischen Eigenschaften führt.

Ebenso überraschend wurde gefunden, dass der Einbau der zusätzlichen aliphatischen Dihydroxyverbindungen HO-X-OH, welche Verzweigungen aufweisen, zu Polymeren mit geringerer Scherviskosität führt. Dies bevorzugt selbst dann, wenn eine höhere Lösungsviskosität vorliegt. Ebenso bevorzugt selbst wenn eine vergleichbare Tg vorliegt.

Das Verfahren zur Herstellung eines erfindungsgemäßen Polyestercarbonats kann beispielsweise durch die Reaktion von Cyclohexandicarbonsäure, Isosorbid, einem zusätzlichen Diol HO-R-OH und Diphenylcarbonat, wie folgt, schematisch beschrieben werden:

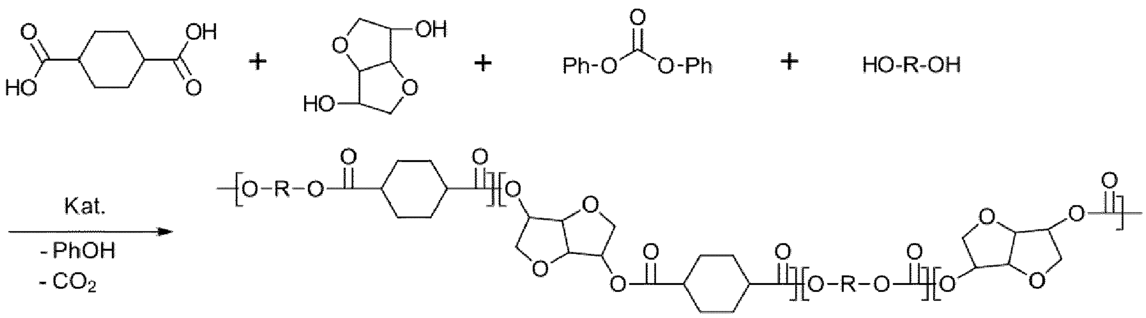


(die Nennung dieser speziellen drei Ausgangssubstanzen dient lediglich der Erläuterung der Erfindung und ist nicht als beschränkend zu verstehen)

In der erfindungsgemäßen Direktsynthese konnte zunächst eine Gasentwicklung beobachtet werden (Kohlenstoffdioxid entwich). Nimmt man eine Probe aus dem Gemisch, nachdem die Gasentwicklung im Wesentlichen nachgelassen hat, so kann man analytisch nachweisen, dass sich bereits Oligomere gebildet haben. Diese Oligomere

kondensieren in einem weiteren Schritt zum erfindungsgemäßen Polyestercarbonat auf. Erfindungsgemäß wird daher ein Polyestercarbonat bereitgestellt, umfassend die Strukturformel (1)

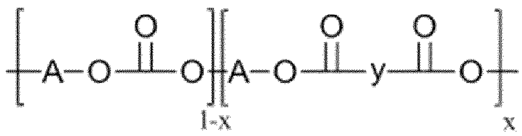

(1),

in der

A pro Wiederholungseinheit unabhängig voneinander zumindest entweder Struktureinheit (A) oder Struktureinheit (B) darstellt, wobei

(A) für die chemische Formel (2) steht

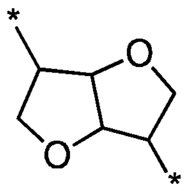

(2)

und

(B) für die chemische Formel (3) steht

*-x-* (3),

wobei x für eine verzweigte Alkylen-Gruppe mit 4 bis 20, bevorzugt 5 bis 15 Kohlenstoffatomen, welche gegebenenfalls durch mindestens ein Heteroatom unterbrochen sein kann oder eine Cycloalkylen-Gruppe mit mindestens einer Verzweigung, wobei die Cycloalkylen-Gruppe 4 bis 20, bevorzugt 5 bis 15 Kohlenstoffatome aufweist, gegebenenfalls durch mindestens ein Heteroatom unterbrochen sein kann und wobei die Cycloalkylen-Gruppe gegebenenfalls mehrere Cyclen enthalten kann, steht,

y jeweils unabhängig voneinander für die chemische Formel (IIIa) oder (IIIb) steht

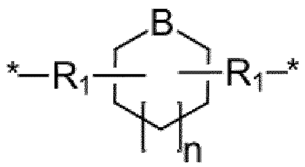

(IIIa)

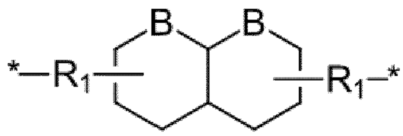

(IIIb)

,

in denen

B jeweils unabhängig voneinander für eine $CH_2$-Gruppe oder ein Heteroatom, welches ausgewählt ist aus der Gruppe, bestehend aus O und S, bevorzugt eine $CH_2$-Grupppe oder ein Sauerstoffatom, steht,

$R_1$ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht,

n eine Zahl zwischen 0 und 3, bevorzugt 0 oder 1 ist und

$$0 < x < 1,$$

wobei die * jeweils die Position angeben, an der die chemischen Formeln ins Polyestercarbonat eingebunden sind,

dadurch gekennzeichnet, dass das Polyestercarbonat

98 mol-% bis 75 mol-%, bevorzugt 97 mol-% bis 80 mol-%, insbesondere bevorzugt 96 mol-% bis 82 mol-% der Struktureinheit (A) und

2 mol-% bis 25 mol-%, bevorzugt 3 mol-% bis 20 mol %, insbesondere bevorzugt 4 mol-% bis 18 mol-% der Struktureinheit (B),

jeweils bezogen auf die Summe der Struktureinheiten (A) und (B), umfasst und

dass das Polyestercarbonat eine relative Lösungsviskosität, gemessen in Dichlormethan bei einer Konzentration von 5 g/l bei 25 °C mit einem Ubbelohdeviskosimeter, von 1,20 bis 1,70, bevorzugt 1,23 bis 1,67, insbesondere bevorzugt 1,25 bis 1,65 aufweist.

In der Strukturformel (1) wird der Bestandteil "A" näher definiert. A kann entweder zumindest (A) oder (B) darstellen. Dies ist unabhängig voneinander für jede Wiederholungseinheit frei wählbar. Erfindungsgemäß bezieht sich der Begriff "Wiederholungseinheit" bevorzugt auf die entweder von durch "[...]$_{1-x}$" oder durch "[...]$_x$ eingerahmte Struktur. Damit umfasst die Strukturformel (1) bereits zwei unterschiedliche Wiederholungseinheiten, welche entweder eine Carbonatstruktur oder eine Esterstruktur zusätzlich zu A aufweisen. A stellt pro Wiederholungseinheit der Strukturformel (1) unabhängig voneinander zumindest entweder Struktureinheit (A) oder Struktureinheit (B) dar. Dabei bedeutet die Verwendung des Begriffs "zumindest", dass A auch noch für eine weitere Struktureinheit (C) stehen kann. Jedoch umfasst das erfindungsgemäße Polyestercarbonat immer zwingend Struktureinheiten (A) und (B) in den definierten Mengenverhältnissen zueinander.

Bevorzugt besteht A nur aus den Struktureinheiten (A) und (B) und umfasst keine weitere Struktureinheit (C). In diesem Fall stellt A pro Wiederholungseinheit der Strukturformel (1) unabhängig voneinander entweder Struktureinheit (A) oder Struktureinheit (B) dar. Des Weiteren ist dem Fachmann ersichtlich, dass (A) mehrere verschiedene Strukturen der Formel (2) aufweisen können. Ebenso kann (B) mehrere verschiedene Strukturen der Formel (3) aufweisen. Bevorzugt weist (A) jedoch nur eine Struktur der Formel (2) auf. Ebenso bevorzugt weist (B) jedoch nur eine Struktur der Formel (3) auf. Besonders bevorzugt weisen (A) und (B) nur eine Struktur der Formel (2) bzw. (3) auf.

Es hat sich überraschenderweise herausgestellt, dass wenn die Menge der Komponente (B) im anspruchsgemäß definierten Bereich ist, der Molekulargewichtsaufbau besonders gut funktioniert, so dass ein Polyestercarbonat erhalten werden kann, welches eine relative Lösungsviskosität von 1,20 bis 1,70 aufweist. Ist die Menge von (B) höher, so findet überraschenderweise nur ein geringer Molekulargewichtsaufbau statt. Dabei war es des Weiteren vorteilhaft, wenn (B) 2 bis 11, bevorzugt 3 bis 10 Kohlenstoffatome aufweist. Dabei wurden Polyestercarbonat erzielt, welche gute mechanische Eigenschaften, insbesondere eine gute Bruchdehnungen und gute E-Module aufweisen. Ferner weisen die erfindungsgemäßen Polyestercarbonate eine gute Schlagzähigkeit auf.

Erfindungsgemäß wird zwischen einer Wiederholungseinheit, einer Struktureinheit und einem Strukturmotiv unterschieden. Dabei wird bevorzugt, wie oben bereits beschrieben, unter einer Wiederholungseinheit die Struktur verstanden, welche in Formel (1) durch die Klammern [...]$_{1-x}$ oder die Klammer [...]$_x$ eingerahmt wird. Damit umfasst Strukturformel (1) bereits zwei Wiederholungseinheiten. Sie weist zudem durch A mindestens die Struktureinheiten (A) und (B) auf. Die Struktureinheiten (A) und (B) (bzw. ggf. auch (C)) sind jeweils einmal in einer Wiederholungseinheit vorhanden. Pro Wiederholungseinheit können sie verschieden sein. Der Begriff Struktureinheit wird erfindungsgemäß bevorzugt für eine Struktur verwendet, welche an sich keine Wiederholungseinheit ist, da sie weder eine Carbonatstruktur noch eine Esterstruktur aufweist. Zudem stellt sie aber auch kein Strukturmotiv dar. Der Begriff wird daher für eine Struktur verwendet, welche kleiner ist als eine Wiederholungseinheit und ein Strukturmotiv. Erfindungsgemäß wird unter einem Strukturmotiv bevorzugt eine solche Struktur verstanden, welche sich von einem eingesetzten Monomer durch Reaktion zum Polymer ableiten lässt. Damit werden erfindungsgemäß unter einem Strukturmotiv zumindest die folgenden Strukturen verstanden:

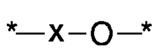 , 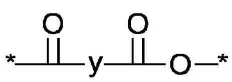 und 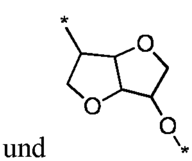.

Dabei wird das erste Strukturmotiv von einem Diol abgeleitet, welches durch Reaktion in das Polymer der Strukturformel (1) eingebaut wird. Der Sauerstoff ist damit entweder Teil der Carbonat- oder Estereinheit in der Strukturformel (1). Das zweite Strukturmotiv ist auf ähnliche Weise von einer Dicarbonsäure abgeleitet. Das dritte Strukturmotiv ist ebenfalls auf ähnliche Weise von einem 1,4:3,6-Dianhydrohexitol abgeleitet.

Im Unterschied dazu weist eine Struktureinheit erfindungsgemäß somit kein Sauerstoff auf und ist somit nicht unmittelbar einem Monomer zuordbar. Struktureinheit (A) entspricht somit dem Strukturmotiv

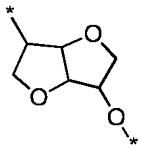

bis auf das Sauerstoffatom. Struktureinheit (B) entspricht dem Strukturmotiv *-x-O-* bis auf das Sauerstoffatom.

Insbesondere ist es bevorzugt, dass das erfindungsgemäße Polyestercarbonat dadurch gekennzeichnet ist, dass das Polyestercarbonat die folgenden Wiederholungseinheiten (i) bis (iv) in beliebiger Reihenfolge umfasst

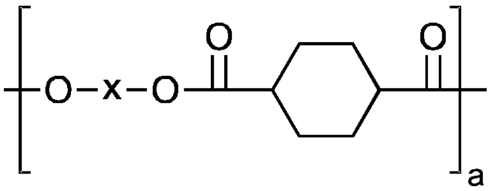
(i)

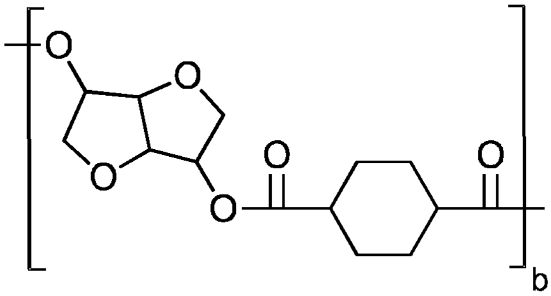
(ii)

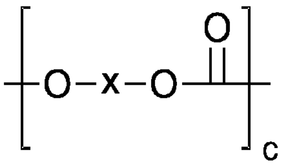
(iii)

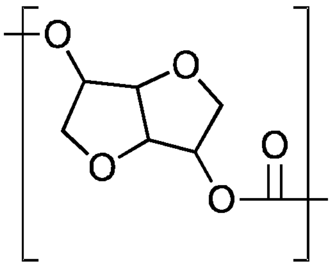
(iv)

in denen a, b, c und d j eweils unabhängig voneinander für eine natürliche Zahl stehen, welche jeweils die mittlere Anzahl an Wiederholungseinheiten angibt. Auch hier werden die Wiederholungseinheiten durch Klammern eingerahmt. Die Indices a, b, c und d stellen sich bevorzugt so ein, dass sich die erfindungsgemäße Lösungsviskosität ergibt. Es war erfindungsgemäß überraschend, dass die Zahlen a, b, c und d so hoch sind, dass ausreichend hohe Molekulargewichte

erhalten wurden.

Erfindungsgemäß ist es bevorzugt, dass das Polyestercarbonat zu mindestens 80 Gew.-%, bevorzugt 85 Gew.-%, besonders bevorzugt 90 Gew.-% aus der Strukturformel (1) besteht, bezogen auf das Gesamtgewicht des Polyestercarbonats. Damit weist das erfindungsgemäße Polyestercarbonat bevorzugt nur geringe Mengen an anderen Strukturen als die in der Strukturformel (1) definierten Strukturen auf. Dabei ist es des Weiteren bevorzugt, dass das erfindungsgemäße Polyestercarbonat keine andere funktionellen Strukturen als Carbonat- und/oder Esterstrukturen aufweist. Das bedeutet, dass sich die höchstens 20 Gew-%, bevorzugt höchstens 15 Gew.-%, besonders bevorzugt höchsten 10 Gew.-% welche nicht aus der Strukturformel (1) bestehen, bevorzugt aus anderen Diolen oder Dicarbonsäuren ableiten lassen, welche durch Einbau in das Polyestercarbonat wiederum zu Carbonat- oder Esterstrukturen führen.

Es ist bevorzugt, dass das erfindungsgemäße Polyestercarbonat dadurch gekennzeichnet ist, dass 1 mol-% bis 20 mol-%, bevorzugt 2 mol-% bis 18 mol %, insbesondere bevorzugt 3 mol-% bis 15 mol-% des Polyestercarbonats aus dem Strukturmotiv *-x-O-* besteht, bezogen auf die gesamte Summe der folgenden Strukturmotive *-x-O-*,

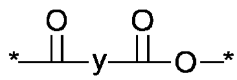 und 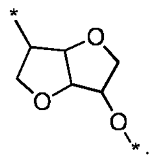

Erfindungsgemäß lässt sich im Polyestercarbonat das Verhältnis der eingesetzten Monomere mit Hydroxy-Funktionalitäten zu Dicarbonsäuren frei einstellen. Je mehr Dihydroxy-Verbindungen eingesetzt werden, desto mehr Carbonatstrukturen resultieren. Je mehr Dicarbonsäure, desto mehr Esterstrukturen. Dadurch ist somit das Verhältnis von Carbonatstrukturen zu Esterstrukturen ebenfalls frei wählbar. Es hat sich gezeigt, dass dies insbesondere am erfindungsgemäßen Verfahren liegt, bei dem alle das Polyestercarbonat aufbauenden Monomere bereits zu Beginn der Synthese vorhanden sind. Dies führt somit zu Polyestercarbonaten mit gezielt einstellbaren Eigenschaften. Allerdings muss dazu das Verhältnis der beiden Dihydroxy-Verbindungen, welche zu Struktureinheiten (A) und (B) führen im erfindungsgemäßen Bereich gehalten werden. Es hat sich dazu als vorteilhaft herausgestellt, wenn die Menge des Strukturmotivs *-x-O-*, welche ohne das Sauerstoffatom die Struktureinheit (B) darstellt, nicht zu hoch ist. Wenn sie zu niedrig ist, so ist der Molekulargewichtsaufbau insgesamt schlechter. Wenn sie zu hoch ist, dann ist die Glasübergangstemperatur des Polyestercarbonats nicht optimal. Die Summe der Carbonatstrukturen ergibt sich dabei immer aus der Summe der eingesetzten Dihydroxy-Verbindungen und Dicarbonsäuren.

Bevorzugt wird (A) ausgewählt aus mindestens einer der Strukturen

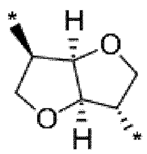 , 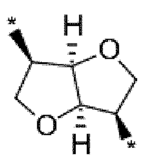 und 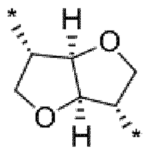 .

Ganz besonders bevorzugt ist (A)

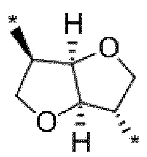

.

Bevorzugt stellt x eine verzweigte Alkylen-Gruppe mit 4 bis 20, bevorzugt 5 bis 15 Kohlenstoffatomen, besonders bevorzugt 5 bis 11 Kohlenstoffatomen, ganz besonders bevorzugt 5 bis 10 Kohlenstoffatomen, dar, welche gegebenenfalls durch mindestens ein Heteroatom unterbrochen sein kann. Bei dem Heteroatom, welches gegebenenfalls die verzweigte Alkylen-Gruppe unterbrechen kann, handelt es sich bevorzugt um Sauerstoff oder Schwefel, besonders bevorzugt um Sauerstoff. Besonders bevorzugt enthält die verzweigte Alkylen-Gruppe nur ein Heteroatom oder kein Heteroatom. Besonders bevorzugt weist die verzweigte Alkylen-Gruppe kein Heteroatom auf. Ist mindestens ein Heteroatom in der Alkylen-Gruppe vorhanden, so bezieht sich die angegebene Kohlenstoffatomanzahl auf die Gesamtzahl der Kohlenstoffatome in der Alkylen-Gruppe. Beispielsweise enthält die Gruppe $-CH_2-CH_2-O-CH_2-CH_2-$ 4 Kohlenstoffatome. Unter dem Begriff "verzweigt" werden die dem Fachmann bekannten Verzweigungen an aliphatischen

Kohlenstoffketten verstanden. Dies bedeutet, dass die verzweigte Alkylen-Gruppe bevorzugt mindestens ein tertiäres und/oder mindestens ein quartäres Kohlenstoffatom umfasst. Es können mehr als eine Verzweigung in der verzweigten Alkylen-Gruppe vorhanden sein. Bevorzugt weisen die Verzweigungen Kettenlängen von 1 bis 5 Kohlenstoffatomen, besonders bevorzugt von 1 bis 4, ganz besonders bevorzugt von 1 bis 3 Kohlenstoffatomen auf. Diese Kohlenstoffatome der Verzweigungen zählen mit zur Gesamtkohlenstoffanzahl der verzweigten Alkylen-Gruppe. Dies bedeutet, dass beispielsweise eine verzweigte Alkylen-Gruppe von $-CH_2-C(CH_3)_2-CH_2-$ 5 Kohlenstoffatome aufweist.

Handelt es sich erfindungsgemäß bei x um eine Cycloalkylen-Gruppe mit mindestens einer Verzweigung und wobei die Cycloalkylen-Gruppe 4 bis 20, bevorzugt 5 bis 15 Kohlenstoffatome aufweist, gegebenenfalls durch mindestens ein Heteroatom unterbrochen sein kann und wobei die Cycloalkylen-Gruppe gegebenenfalls mehrere Cyclen enthalten kann, so gelten die oben genannten Ausführungen für das Heteroatom. Bei dem Heteroatom, welches gegebenenfalls die Cycloalkylen-Gruppe unterbrechen kann, handelt es sich bevorzugt um Sauerstoff oder Schwefel, besonders bevorzugt um Sauerstoff. Besonders bevorzugt enthält die Cycloalkylen-Gruppe nur ein Heteroatom oder kein Heteroatom. Besonders bevorzugt weist die Cycloalkylen-Gruppe kein Heteroatom auf. Bevorzugt weist die Cycloalkylen-Gruppe mindestens einen, bevorzugt einen Cylcus mit 4 bis 6 Kohlenstoffatomen auf. Insbesondere ist es bevorzugt, dass die Cycloalkylen-Gruppe insgesamt 4 bis 20, bevorzugt 5 bis 15 Kohlenstoffatome und einen Cyclus mit 4 bis 5 Kohlenstoffatomen aufweist. Dabei zählen die Kohlenstoffatome des Cyclus zu der Gesamtkohlenstoffatomanzahl der Cycloalkylen-Gruppe hinzu. Dies bedeutet, dass eine Tetramethylcyclobutenyl-Gruppe insgesamt 8 Kohlenstoffatome aufweist mit einem Cyclus mit 4 Kohlenstoffatomen. Des Weiteren weist die Cycloalkylen-Gruppe mindestens eine Verzweigung auf Diese Verzweigungen können in der gegebenenfalls vorhandenen cycloaliphatischen Kette und/oder dem Cyclus vorhanden sein. Bevorzugt sind die Verzweigungen im Cyclus vorhanden. Unter dem Begriff "Verzweigung" in Bezug auf die Cycloalkylen-Gruppe werden die dem Fachmann bekannten Verzweigungen verstanden. Dies bedeutet, dass die verzweigte Cycloalkylen-Gruppe bevorzugt mindestens ein tertiäres und/oder mindestens ein quartäres Kohlenstoffatom umfasst. Dabei ist es ersichtlich, dass die beiden tertiären Kohlenstoffatome, welche den Cyclus mit der Polymerkette verbinden, erfindungsgemäß nicht als Verzweigungen verstanden werden. Dies bedeutet bevorzugt, dass, wenn die Cycloalkylen-Gruppe zumindest am Cyclus mindestens eine Verzweigung aufweist, dieser Cyclus dann zusätzlich zu den beiden tertiären Kohlenstoffatomen, welche den Cyclus mit der Polymerkette verbinden (siehe auch die "*" in Formel (3)) mindestens ein tertiäres und/oder quartäres Kohlenstoffatom aufweist. Ebenso ist es auch möglich, dass die Verzweigung in einer Alkyl-Gruppe vorhanden ist, welche am Cyclus vorhanden ist (wenn x beispielsweise 2,2-bis(4-cyclohexylen)propan ist). Besonders bevorzugt wird unter "verzweigt" in Bezug auf die Cycloalkylen-Gruppe verstanden, dass die Gruppe mindestens ein quartäres Kohlenstoffatom aufweist. Bevorzugt handelt sich es bei x um eine Cycloalkylen-Gruppe mit 5 bis 15 Kohlenstoffatomen mit einem Cyclus, welcher gegebenenfalls mindestens eine Verzweigung aufweist, bevorzugt mindestens eine Verzweigung aufweist und mindestens einen Cyclus, bevorzugt einen Cyclus mit 4 bis 6 Kohlenstoffatomen, besonders bevorzugt 4 bis 5 Kohlenstoffatomen aufweist.

Insgesamt ist es erfindungsgemäß bevorzugt, dass x 2 bis 10 Kohlenstoffatome aufweist.

Besonders bevorzugt wird *-x-* ausgewählt aus der Gruppe, bestehend aus 2,2-bis(4-cyclohexylen)propan, 2-Butyl-2-ethyl-1,3-propylen, 2,2,4,4-Tetramethyl-1,3-cyclobutylen, 2,2,4-Trimethyl-1,3-pentylen, 2,2-Dimethylpropan-1,3-ylen, 8-(Methylen)-3-tricyclo[5.2.1.02,6]decanyl]methylen, und beliebigen Mischungen daraus. Insbesondere ist es bevorzugt dass x in *-x-* ausgewählt wird aus der Gruppe, bestehend aus 2-Butyl-2-ethyl-1,3-propylen, 2,2,4,4-Tetramethyl-1,3-cyclobutylen, 2,2,4-Trimethyl-1,3-pentylen, 2,2-Dimethylpropan-1,3-ylen, und beliebigen Mischungen daraus. Ebenso ist es bevorzugt, dass x in *-x-* ausgewählt wird aus der Gruppe, bestehend aus 2-Butyl-2-ethyl-1,3-propylen, 2,2,4,4-Tetramethyl-1,3-cyclobutylen, 2,2,4-Trimethyl-1,3-pentylen, 2,2-Dimethylpropan-1,3-ylen und beliebigen Mischungen daraus. Ganz besonders bevorzugt ist es bevorzugt, dass x in *-x-* ausgewählt wird aus der Gruppe, bestehend aus 2-Butyl-2-ethyl-1,3-propylen, 2,2,4,4-Tetramethyl-1,3-cyclobutylen, 2,2,4-Trimethyl-1,3-pentylen, 2,2-Dimethylpropan-1,3-ylen, und beliebigen Mischungen daraus. Wie oben bereits dargelegt, kann x eine Mischung aus den oben genannten Strukturen sein. Bevorzugt stellt x jedoch nur eine der Strukturen dar.

Erfindungsgemäß steht y jeweils unabhängig voneinander für die chemische Formel (IIIa) oder (IIIb)

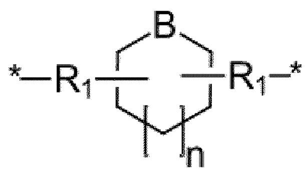

(IIIa)

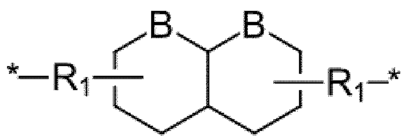

(IIIb)

,

in denen

B jeweils unabhängig voneinander für ein Kohlenstoffatom oder ein Heteroatom, welches ausgewählt ist aus der Gruppe, bestehend aus O und S, bevorzugt ein Kohlenstoffatom oder ein Sauerstoffatom, steht,

$R_1$ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht,

n eine Zahl zwischen 0 und 3, bevorzugt 0 oder 1 ist.

Dabei versteht es sich, dass wenn $R_1$ eine Einfachbindung darstellt, $R_1$ somit Null Kohlenstoffatome umfasst.

Insbesondere ist es bevorzugt, dass y ausgewählt ist aus der Gruppe, bestehend aus 1,2-Cyclohexylen, 1,3-Cyclohexylen, 1,4-Cyclohexylen, 1,2-Cyclohexandimethylen, 1,3-Cyclohexandimethylen, 1,4-Cyclohexandimethylen, 2,2-bis(4-cyclohexylen)propan, Tetrahydro-2,5-furandimethylen, 2-Butyl-2-ethyl-1,3-propylen, 2-(2-Ethyloxy)ethylen, 2,2,4,4-Tetramethyl-1,3-cyclobutylen, 2,2,4-Trimethyl-1,3-pentylen, 2,2-Dimethylpropan-1,3-ylen, Cyclobutan-1,1-diyldimethylen, 8-(Methylen)-3-tricyclo[5.2.1.02,6]decanyl]methylen, 1,2-Propylen, 1,3-Propanylen, 1,4-Butylen, 1,5-Pentylen, 1,6-Hexylen, 1,8-Octylen und beliebigen Mischungen daraus. Besonders bevorzugt ist y ausgewählt aus der Gruppe, bestehend aus 1,2-Cyclohexylen, 1,3-Cyclohexylen und 1,4-Cyclohexylen.

Zusätzlich können neben den genannten Strukturen für y auch noch geringe Menge weitere Säuren eingesetzt werden. Besonders bevorzugt weist y somit zusätzlich bis zu 20 mol-%, weiterhin bevorzugt bis zu 10 mol-% und ganz besonders bevorzugt bis zu 5 mol-% eine Strukturfomel y1 und/oder y2 auf. Bevorzugt weist y1 keinen Cyclus auf. Besonders bevorzugt wird y1 ausgewählt aus der Gruppe, bestehend aus 2,2,4-Trimethylbutylen, 2,4,4-Trimethylbutylen, 2,2,5-Trimethylbutylen und 3,3-Dimethylpropylen. Ebenso ist es bevorzugt, dass y2 ausgewählt wird aus der Gruppe bestehend aus von den folgenden Dicarbonsäuren abgeleiteten Strukturen Isophthalsäure, Terephthalsäure, 2,5-Furandicarbonsäure und 2,6-Napthalindicarbonsäure. Hierbei ist ersichtlich, dass die entstehenden Estergruppe nicht zur Struktureinheit y2 gehören In diesen Fällen wird erfindungsgemäß bevorzugt immer noch von einem aliphatischen Polyestercarbonat gesprochen. Besonders bevorzugt enthält das erfindungsgemäße Polyestercarbonat jedoch keine aromatischen Strukturen, welche von aromatischen Dicarbonsäuren abgeleitet sind.

Bevorzugt ist es, wenn das erfindungsgemäße Polyestercarbonat dadurch gekennzeichnet ist, dass das molare Verhältnis der Summe der Strukturmotive *-x-O-* und

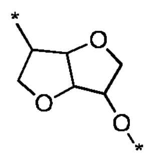

zum Strukturmotiv

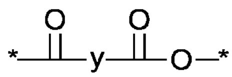

6:4 bis 9:1, bevorzugt 7:3 zu 8:2 ist. Wie bereits oben erläutert, ist dieses Verhältnis im erfindungsgemäßen Polyestecarbonat frei wählbar. Dadurch wird eine gute Balance zwischen Starrheit und Flexibilität der Polymerketten erzielt, was zu entsprechend guten mechanischen Eigenschaften führt.

Ebenso ist es bevorzugt, wenn das erfindungsgemäße Polyestercarbonat dadurch gekennzeichnet ist, dass mindestens 45 mol-%, bevorzugt mindestens 50 mol-% des Polyestercarbonats aus dem Strukturmotiv

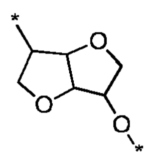

besteht, bezogen auf die gesamte Summe der folgenden Strukturmotive *-x-O-*

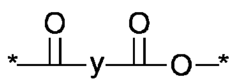 und 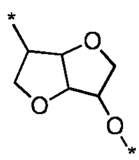.

Diese Menge ist insbesondere von Vorteil, um eine hohe Glasübergangstemperatur zu erzielen.

Des Weiteren ist es erfindungsgemäß auch nicht ausgeschlossen, dass A zusätzlich für die Struktureinheit (C) steht. Dabei umfasst (C) aromatische Strukturen. Diese sind bevorzugt jedoch nur zu geringen Anteilen vorhanden. Bevorzugt ist (C) zusätzlich bis zu 20 mol-%, weiterhin bevorzugt bis zu 10 mol-% und ganz besonders bevorzugt bis zu 5 mol-% in Bezug auf die gesamte Summe der Struktureinheiten (A), (B) und (C) vorhanden. Dabei bleibt das anspruchsgemäß definierte Verhältnis von (A) und (B) gleich. In diesen Fällen wird erfindungsgemäß bevorzugt immer noch von einem aliphatischen Polyestercarbonat gesprochen. Besonders bevorzugt weist das erfindungsgemäße Polyestercarbonat jedoch keine Struktureinheit (C) auf. Genauso ist es bevorzugt, dass das erfindungsgemäße Polyestercarbonat weder eine Struktureinheit (C) noch eine aromatische Struktureinheit y2 aufweist. In der Regel setzen aromatische Verbindungen in Polyestercarbonaten deren UV-Stabilität und Witterungsbeständigkeit herunter. Dies ist insbesondere für Außenanwendungen nachteilig. Zudem senken aromatische Anteile in einem Polyestercarbont die Oberflächenhärte von daraus hergestellten Formkörpern, was ggf. zur Notwendigkeit von Lackierung führt. Außerdem stellen beispielsweise Diphenylester von aromatischen Säuren, welche intermediär entstehen können, stabile Zwischenprodukte dar, die die Polykondensation verlangsamen können. Dadurch müssen ggf. weitere spezifische Katalysatoren eingesetzt werden. Dementsprechend ist es bevorzugt, dass A aus (A) und (B) besteht.

Diese zusätzlichen Struktureinheiten (C) werden bevorzugt ausgewählt aus der Gruppe von Struktureinheiten, welche abgeleitet werden von den folgenden Diolen Bisphenol A, 1,1-Bis-(4-hydroxyphenyl)-3,3,5-trimethylcyclohexan, 4,4'-Dihydroxybiphenyl (DOD), 4,4'-Dihydroxybiphenylether (DOD-Ether), Bisphenol B, Bisphenol M, den Bisphenolen (I) bis (III)

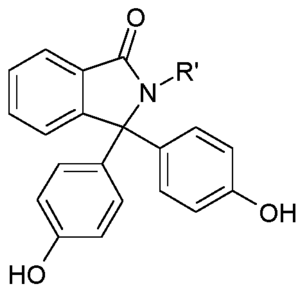
(I)

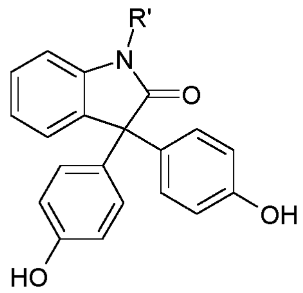
(II)

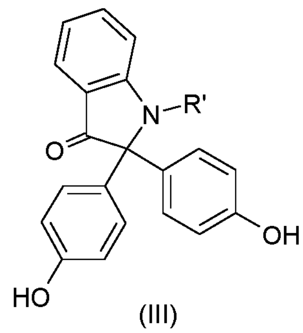
(III)

wobei in diesen Formeln (I) bis (III) R' jeweils für C1-C4-Alkyl, Aralkyl oder Aryl, bevorzugt für Methyl oder Phenyl, ganz besonders bevorzugt für Methyl, steht. Der Ausdruck "abgeleitet von" bedeutet erfindungsgemäß bevorzugt, dass das entsprechende Monomer über die Hydroxylgruppe oder aber auch Säuregruppe in das entstehende Polyestercarbonat eingebracht wird entweder durch Ausbildung einer Estergruppe oder durch Ausbildung einer Carbonatgruppe.

Erfindungsgemäß ist es bevorzugt, dass, wenn weitere Bausteine zur Strukturformel (1) oder in der Strukturformel (1) vorhanden sind, die zuvor definierten mol-% und Verhältnisse erhalten bleibe. Die Stoffmenge des jeweils neu definierten Bausteins, kommt dann hinzu.

Ebenso ist es bevorzugt, dass die definierten mol-% in dem erfindungsgemäße Polyestercarbonat über $^{1}$H-NMR bestimmt werden. Dem Fachmann ist diese Methode bekannt. Das Polyestercarbonat kann beispielsweise in $CDCl_3$ gelöst werden und die entsprechenden Peaks der Struktureinheiten identifiziert werden. Über die Integrale können die Verhältnisse und Anteile bestimmt werden. Auf der anderen Seite sind die erfindungsgemäßen mol-% auch bestimmbar über die eingesetzten Stoffmengen und Verhältnisse der Monomere. Dabei muss angenommen werden, dass alle Monomere im gleichen Verhältnis vollständig in das Polyestercarbonat einbauen. So kann der Fachmann auch das Verhältnis im Vorhinein einstellen.

Das erfindungsgemäße Polyestercarbonat weist eine relative Lösungsviskosität von 1,20 bis 1,70, bevorzugt 1,23 bis 1,67, insbesondere bevorzugt 1,25 bis 1,65 auf. Die relative Lösungsviskosität ($\eta$rel; auch als eta rel bezeichnet) wurde in Dichlormethan bei einer Konzentration von 5 g/l bei 25 °C mit einem Ubbelohdeviskosimeter bestimmt. Dem Fachmann ist die Bestimmung der relativen Lösungsviskosität mittels Ubbelohdeviskosimeter bekannt. Erfindungsgemäß wird diese bevorzugt gemäß DIN 51562-3; 1985-05 durchgeführt. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

Hier Methode, wie eta rel bestimmt wird.

In einem weiteren Aspekt der vorliegenden Erfindung wird ein Verfahren zur Herstellung des erfindungsgemäßen Polyestercarbonats mittels Schmelzeumesterung bereitgestellt, umfassend die Schritte

(i) Reaktion zumindest mindestens einer Dicarbonsäure der chemischen Formel (IIa) oder (IIb)

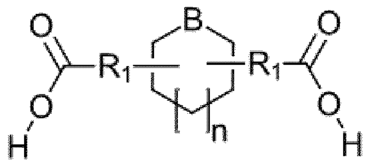

(IIa)

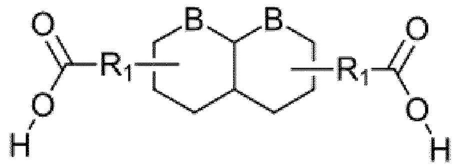

(IIb)

,

worin

B jeweils unabhängig voneinander für eine $CH_2$-Gruppe oder ein Heteroatom, welches ausgewählt ist aus der Gruppe, bestehend aus O und S, bevorzugt eine $CH_2$-Gruppe oder ein Sauerstoffatom, steht,

$R_1$ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht und

n eine Zahl zwischen 0 und 3, bevorzugt 0 oder 1 ist,
mit mindestens einem Diarylcarbonat unter Verwendung mindestens eines Katalysators und in Anwesenheit einer Mischung aus Dihydroxy-Verbindungen, umfassend Komponente (A) mindestens ein 1,4:3,6-Dianhydrohexitol und Komponente (B) mindestens eine weitere aliphatische Dihydroxyverbindung der chemischen Formel (I)

HO-X-OH (I),

in der X für eine eine verzweigte Alkylen-Gruppe mit 4 bis 20, bevorzugt 5 bis 15 Kohlenstoffatomen, welche gegebenenfalls durch mindestens ein Heteroatom unterbrochen sein kann oder eine Cycloalkylen-Gruppe mit mindestens einer Verzweigung, wobei die Cycloalkylen-Gruppe 4 bis 20, bevorzugt 5 bis 15 Kohlenstoffatome aufweist, gegebenenfalls durch mindestens ein Heteroatom unterbrochen sein kann und wobei die Cycloalkylen-Gruppe gegebenenfalls mehrere Cyclen enthalten kann, steht, und

(ii) weitere Aufkondensation des aus Verfahrensschritt (i) erhaltenen Gemisches zumindest unter Entfernung der bei der Kondensation abgespaltenen chemischen Verbindung,

dadurch gekennzeichnet, dass die Mischung aus Dihydroxy-Verbindungen

98 mol-% bis 75 mol-%, bevorzugt 97 mol-% bis 80 mol-%, insbesondere bevorzugt 96 mol-% bis 82 mol-% der Komponente (A) und

2 mol-% bis 25 mol-%, bevorzugt 3 mol-% bis 20 mol %, insbesondere bevorzugt 4 mol-% bis 18 mol-% der Komponente (B),

jeweils bezogen auf die Summe der Komponenten (A) und (B), umfasst. Erfindungsgemäß findet in Verfahrensschritt (i) zumindest die Reaktion mindestens einer cycloaliphatischen Dicarbonsäure mit mindestens einem Diarylcarbonat statt. Jedoch kann erfindungsgemäß nicht ausgeschlossen werden, dass noch weitere Reaktion durch die Anwesenheit des mindestens einen 1,4:3,6-Dianhydrohexitol (im Folgenden auch Komponente (A)) und der mindestens einen weiteren aliphatischen Dihydroxy-Verbindung (im Folgenden auch Komponente (B)) entstehen (hier ist zu beachten, dass Komponente (A) und Komponente (B) nachher zu den Struktureinheiten (A) und (B) im erfindungsgemäßen Polyestercarbonat führen). Tatsächlich konnte in Beispielen nachgewiesen werden, dass sich bereits im Verfahrensschritt (i) Oligomere bilden, welche im MALDI-ToF Massenspektrometer einen Massenabstand aufweisen, welche eine Einheit aus

Komponente (A) und/oder Komponente (B) mit Carbonat (unter Verlust der beiden Hydroxy-Gruppen) entspricht. Dies bedeutet, dass in Verfahrensschritt (i) weitere Reaktion neben der Bildung des Diesters stattfinden können. Dies bedeutet jedoch erfindungsgemäß auch, dass die Reaktion sämtlicher vorhandener cycloaliphatischen Dicarbonsäure mit den stöchimetrisch enstprechenden Diarylcarbonaten nicht vollständig stattgefunden haben muss, bis Verfahrensschritt (ii) initiiert wird. Bevorzugt wird jedoch erfindungsgemäß der Verfahrensschritt (i) so lang durchgeführt, bis ein wesentliches Abklingen der Gasbildung beobachtet werden kann, und dann wird erst Verfahrensschritt (ii) beispielsweise durch Anlegen eines Vakuums zur Entfernung der bei der Kondensation abgespaltenen chemischen Verbindung initiiert. Wie bereits oben ausgeführt, können die Verfahrensschritte (i) und (ii) jedoch gegebenenfalls erfindungsgemäß nicht scharf voneinander getrennt werden.

Verfahrensschritt (i)

Das erfindungsgemäße Verfahren wird als Direktsynthese oder auch one-pot-Synthese bezeichnet, da in Verfahrensschritt (i) bereits alle das spätere Polyestercarbonat aufbauenden Strukturelemente als Monomere anwesend sind. Dies bedeutet bevorzugt, dass erfindungsgemäß alle aliphatischen Dihydroxy-Verbindungen (in jedem Fall Komponente (A) und (B)), alle cycloaliphatischen Dicarbonsäuren und auch alle Diarylcarbonate in diesem Schritt anwesend sind, selbst wenn es sich um mehr als nur jeweils die Dihydroxy-Verbindungen der Komponenten (A) und (B), eine cycloaliphatische Dicarbonsäure und/oder ein Diarylcarbonat handelt. Damit ist es erfindungsgemäß bevorzugt, dass bereits während des Verfahrensschritts (i) alle Monomere, die in Verfahrensschritt (ii) zum Polyestercarbonat aufkondensiert werden, anwesend sind. Erfindungsgemäß ebenfalls umfasst kann die Ausführungsform sein, in der ein geringer Anteil des mindestens einen Diarylcarbonats zusätzlich in Verfahrensschritt (ii) zugegeben wird. Dies kann gezielt dazu eingesetzt werden, um den OH-Endgruppengehalt des entstehenden Polyestercarbonats zu reduzieren. Ein solches Vorgehen ist beispielsweise in der JP2010077398 A beschrieben. Hierbei ist es jedoch erforderlich, dass das in geringen Mengen in Verfahrensschritt (ii) hinzugefügte mindestens eine Diarylcarbonat dem in Verfahrensschritt (i) anwesenden mindestens einem Diarylcarbonat entspricht, damit immer noch alle das spätere Polyestercarbonat aufbauenden Strukturelemente als Monomere in Verfahrensschritt (i) anwesend und keine weiteren Strukturelemente zugefügt werden. In diesem Sinne kann also immer noch von einer Direktsynthese oder one-pot-Synthese gesprochen werden.

Des Weiteren ist es erfindungsgemäß auch nicht ausgeschlossen, dass aromatische Dihydroxyverbindungen und/oder aromatische Dicarbonsäuren in Verfahrensschritt (i) vorhanden sind. Diese sind bevorzugt jedoch nur zu geringen Anteilen vorhanden. Besonders bevorzugt sind in Verfahrensschritt (i) zusätzlich bis zu 20 mol-%, weiterhin bevorzugt bis zu 10 mol-% und ganz besonders bevorzugt bis zu 5 mol-% einer aromatischen Dihydroxy-Verbindung (Komponente (C)) in Bezug auf die gesamte Stoffmenge der eingesetzten Dihydroxy-Verbindung vorhanden. Dabei bleibt das anspruchsgemäß definierte Verhältnis der Komponenten (A) und (B) gleich. Ebenso ist es besonders bevorzugt, dass in Verfahrensschritt (i) zusätzlich, gegebenenfalls auch zusätzlich zur aromatischen Dihydroxy-Verbindung bis zu 20 mol-%, weiterhin bevorzugt bis zu 10 mol-% und ganz besonders bevorzugt bis zu 5 mol-% einer aromatischen Dicarbonsäure in Bezug auf die gesamte Stoffmenge der eingesetzten Dicarbonsäure vorhanden ist. In diesen Fällen wird erfindungsgemäß bevorzugt immer noch von einem aliphatischen Polyestercarbonat gesprochen. Besonders bevorzugt wird jedoch keine aromatische Dihydroxy-Verbindung in Verfahrensschritt (i) eingesetzt. Ebenso bevorzugt wird keine aromatische Dicarbonsäure in Verfahrensschritt (i) eingesetzt. Genauso ist es bevorzugt, dass in Verfahrensschritt (i) weder eine aromatische Dihydroxy-Verbindung noch eine aromatische Dicarbonsäure eingesetzt wird. In der Regel setzen aromatische Verbindungen in Polyestercarbonaten deren UV-Stabilität und Witterungsbeständigkeit herunter. Dies ist insbesondere für Außenanwendungen nachteilig. Zudem senken aromatische Anteile in einem Polyestercarbont die Oberflächenhärte von daraus hergestellten Formkörpern, was ggf. zur Notwendigkeit von Lackierung führt. Außerdem stellen beispielsweise Diphenylester von aromatischen Säuren, welche intermediär entstehen können, stabile Zwischenprodukte dar, die die Polykondensation verlangsamen können. Dadurch müssen ggf. weitere spezifische Katalysatoren eingesetzt werden.

Diese zusätzlichen aromatischen Dihydroxy-Verbindungen (Komponente (C)) werden bevorzugt ausgewählt aus der Gruppe, bestehend aus Bisphenol A, 1,1-Bis-(4-hydroxyphenyl)-3,3,5-trimethylcyclohexan, 4,4'-Dihydroxybiphenyl (DOD), 4,4'-Dihydroxybiphenylether (DOD-Ether), Bisphenol B, Bisphenol M, den Bisphenolen (I) bis (III)

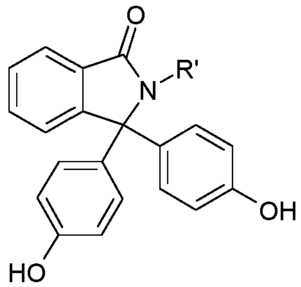 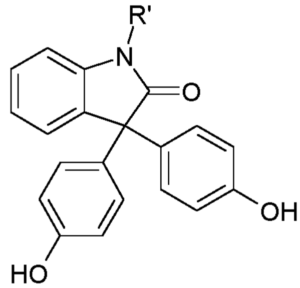 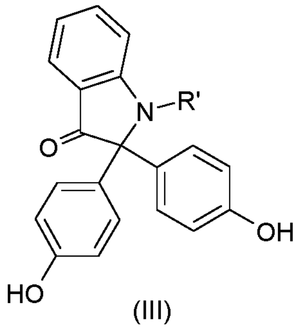

(I) (II) (III)

wobei in diesen Formeln (I) bis (III) R' jeweils für C1-C4-Alkyl, Aralkyl oder Aryl, bevorzugt für Methyl oder Phenyl, ganz besonders bevorzugt für Methyl, steht.

Diese zusätzlichen aromatischen Dicarbonsäuren werden bevorzugt ausgewählt aus der Gruppe, bestehend aus Isophthalsäure, Terephthalsäure, 2,5-Furandicarbonsäure und 2,6-Napthalindicarbonsäure. Es ist bekannt, dass geringe Anteile an diesen aromatischen Disäuren die Wasseraufnahme eines aliphatischen Polyestercarbonats verringern können.

Erfindungsgemäß wird in Verfahrensschritt (i) als Komponente (A) mindestens ein 1,4:3,6-Dianhydrohexitol eingesetzt. Wie dem Fachmann bekannt ist, werden 1,4:3,6-Dianhydrohexitole in der Regel ausgewählt aus der Gruppe, bestehend aus Isomannid, Isoidid und Isosorbid. Dabei kann es sich um ein biobasiertes Strukturelement handeln, womit alle Vorteile eines biobasierten Monomers und dem daraus resultierenden Polymer einhergehen (z. B. bessere Nachhaltigkeit, da aus nachwachsenden Rohstoffen zugänglich). Besonders bevorzugt ist das erfindungsgemäße Verfahren dadurch gekennzeichnet, dass das mindestens eine 1,4:3,6-Dianhydrohexitol Isosorbid ist. Es ist bevorzugt, dass Komponente (A) aus Isosorbid besteht.

Erfindungsgemäß wird in Verfahrensschritt (i) mindestens eine weitere aliphatische Dihydroxy-Verbindung (Komponente (B)) eingesetzt. Dabei ist es bevorzugt, dass Komponente (B) aus zwei weiteren aliphatischen Dihydroxy-Verbindungen besteht. Ebenso ist es bevorzugt, dass Komponente (B) aus einer weiteren aliphatischen Dihydroxy-Verbindungen besteht. Damit ist es insbesondere bevorzugt, dass Komponente (A) aus Isosorbid besteht und Komponente (B) aus einer weiteren aliphatischen Dihydroxy-Verbindungen besteht. Gegebenenfalls kann in der Mischung aus Dihydroxy-Verbindungen noch eine Komponente (C) vorhanden sein, welche eine aromatische Dihydroxy-Verbindung umfasst (siehe oben).

Dabei ist es bevorzugt, dass die mindestens eine weitere aliphatische Dihydroxy-Verbindung die chemische Formel (I) aufweist:

HO-X-OH (I),

in der X für eine lineare Alkylen-Gruppe mit 2 bis 22, bevorzugt 2 bis 15 Kohlenstoffatomen, besonders bevorzugt 2 bis 10 Kohlenstoffatomen, welche gegebenenfalls durch mindestens ein Heteroatom unterbrochen sein kann, eine verzweigte Alkylen-Gruppe mit 4 bis 20, bevorzugt 5 bis 15 Kohlenstoffatomen, welche gegebenenfalls durch mindestens ein Heteroatom unterbrochen sein kann oder eine Cycloalkylen-Gruppe mit 4 bis 20, bevorzugt 5 bis 15 Kohlenstoffatomen, welche gegebenenfalls durch mindestens ein Heteroatom unterbrochen sein kann und wobei die Cycloalkylen-Gruppe gegebenenfalls mehrere Cyclen enthalten kann und jeweils gegebenenfalls verzweigt sein kann, steht.

Insbesondere ist es bevorzugt, dass in Formel (I) X für eine verzweigte Alkylen-Gruppe mit 4 bis 20, bevorzugt 5 bis 15 Kohlenstoffatomen, welche gegebenenfalls durch mindestens ein Heteroatom unterbrochen sein kann oder eine Cycloalkylen-Gruppe mit mindestens einer Verzweigung , wobei die Cycloalkylen-Gruppe 4 bis 20, bevorzugt 5 bis 15 Kohlenstoffatome aufweist, gegebenenfalls durch mindestens ein Heteroatom unterbrochen sein kann und wobei die Cycloalkylen-Gruppe gegebenenfalls mehrere Cyclen enthalten kann, steht.

Handelt es sich erfindungsgemäß bei X um eine lineare Alkylen-Gruppe, welche gegebenenfalls durch mindestens ein Heteroatom unterbrochen sein kann, so weist diese bevorzugt 2 bis 15, besonders bevorzugt 2 bis 12, ganz besonders bevorzugt 2 bis 11, insbesondere bevorzugt 2 bis 10, weiter bevorzugt 2 bis 6 und weiter bevorzugt 3 bis 4 Kohlenstoffatome auf. Bei dem Heteroatom, welches gegebenenfalls die Alkylen-Gruppe unterbrechen kann, handelt es sich bevorzugt um Sauerstoff oder Schwefel, besonders bevorzugt um Sauerstoff. Besonders bevorzugt enthält die Alkylen-Gruppe nur ein Heteroatom oder kein Heteroatom. Ist mindestens ein Heteroatom in der Alkylen-Gruppe vorhanden, so bezieht sich die angegebene Kohlenstoffatomanzahl auf die Gesamtzahl der Kohlenstoffatome in der Alkylen-Gruppe. Beispielsweise enthält die Gruppe $-CH_2-CH_2-O-CH_2-CH_2-$ 4 Kohlenstoffatome. Erfindungsgemäß ist es bevorzugt, dass die lineare Alkylen-Gruppe, welche gegebenenfalls durch mindestens ein Heteroatom unterbrochen ist, weniger als 12, besonders bevorzugt weniger als 10 Kohlenstoffatome aufweist. Besonders bevorzugt weist die Alkylen-Gruppe kein Heteroatom auf.

Bevorzugt stellt X eine verzweigte Alkylen-Gruppe mit 4 bis 20, bevorzugt 5 bis 15 Kohlenstoffatomen, besonders bevorzugt 5 bis 11 Kohlenstoffatomen, ganz besonders bevorzugt 5 bis 10 Kohlenstoffatomen dar, welche gegebenenfalls durch mindestens ein Heteroatom unterbrochen sein kann. Bei dem Heteroatom, welches gegebenenfalls die verzweigte Alkylen-Gruppe unterbrechen kann, handelt es sich bevorzugt um Sauerstoff oder Schwefel, besonders bevorzugt um Sauerstoff. Besonders bevorzugt enthält die verzweigte Alkylen-Gruppe nur ein Heteroatom oder kein Heteroatom. Besonders bevorzugt weist die verzweigte Alkylen-Gruppe kein Heteroatom auf. Ist mindestens ein Heteroatom in der Alkylen-Gruppe vorhanden, so bezieht sich die angegebene Kohlenstoffatomanzahl auf die Gesamtzahl der Kohlenstoffatome in der Alkylen-Gruppe. Beispielsweise enthält die Gruppe $-CH_2-CH_2-O-CH_2-CH_2-$ 4 Kohlenstoffatome. Unter dem Begriff "verzweigt" werden die dem Fachmann bekannten Verzweigungen an aliphatischen Kohlenstoffketten verstanden. Dies bedeutet, dass die verzweigte Alkylen-Gruppe bevorzugt mindestens ein tertiäres und/oder mindestens ein quartäres Kohlenstoffatom umfasst. Es können mehr als eine Verzweigung in der verzweigten Alkylen-Gruppe vorhanden sein. Bevorzugt weisen die Verzweigungen Kettenlängen von 1 bis 5 Kohlenstoffatomen, besonders bevorzugt von 1 bis 4, ganz besonders bevorzugt von 1 bis 3 Kohlenstoffatomen auf. Diese Kohlenstoffatome der Verzweigungen zählen mit zur Gesamtkohlenstoffanzahl der verzweigten Alkylen-Gruppe. Dies bedeutet, dass beispielsweise eine verzweigte Alkylen-Gruppe von $-CH_2-C(CH_3)_2-CH_2-$ 5 Kohlenstoffatome aufweist.

Handelt es sich erfindungsgemäß bei X um eine Cycloalkylen-Gruppe mit 4 bis 20, bevorzugt 5 bis 15 Kohlenstoffatomen, welche gegebenenfalls durch mindestens ein Heteroatom unterbrochen sein kann und wobei die Cycloalkylen-Gruppe gegebenenfalls mehrere Cyclen enthalten kann und jeweils gegebenenfalls verzweigt sein kann, so gelten die oben genannten Ausführungen für das Heteroatom. Bei dem Heteroatom, welches gegebenenfalls die Cycloalkylen-Gruppe unterbrechen kann, handelt es sich bevorzugt um Sauerstoff oder Schwefel, besonders bevorzugt um Sauerstoff. Besonders bevorzugt enthält die Cycloalkylen-Gruppe nur ein Heteroatom oder kein Heteroatom. Besonders bevorzugt weist die Cycloalkylen-Gruppe kein Heteroatom auf. Bevorzugt weist die Cycloalkylen-Gruppe mindestens einen, bevorzugt einen Cylcus mit 4 bis 6 Kohlenstoffatomen auf. Insbesondere ist es bevorzugt, dass die Cycloalkylen-Gruppe insgesamt 4 bis 20, bevorzugt 5 bis 15 Kohlenstoffatome und einen Cyclus mit 4 bis 5 Kohlenstoffatomen aufweist. Dabei zählen die Kohlenstoffatome des Cyclus zu der Gesamtkohlenstoffatomanzahl der Cycloalkylen-Gruppe hinzu. Dies bedeutet, dass eine Tetramethylcyclobutenyl-Gruppe insgesamt 8 Kohlenstoffatome aufweist mit einem Cyclus mit 4 Kohlenstoffatomen. Des Weiteren kann die Cycloalkylen-Gruppe mindestens eine Verzweigung aufweisen. Dies ist insbesondere bevorzugt. Wenn Verzweigungen vorhanden sind, dann können diese in der gegebenenfalls vorhandenen cycloaliphatischen Kette und/oder dem Cyclus vorhanden sein. Bevorzugt sind die Verzweigungen im Cyclus vorhanden. Bevorzugt handelt sich es bei X um eine Cycloalkylen-Gruppe mit 5 bis 15 Kohlenstoffatomen mit einem Cyclus, welcher gegebenenfalls mindestens eine Verzweigung aufweist, bevorzugt mindestens eine Verzweigung aufweist und mindestens einen Cyclus, bevorzugt einen Cyclus mit 4 bis 6 Kohlenstoffatomen, besonders bevorzugt 4 bis 5 Kohlenstoffatomen aufweist.

Handelt es sich erfindungsgemäß bei X um eine verzweigte Cycloalkylen-Gruppe mit 4 bis 20, bevorzugt 5 bis 15 Kohlenstoffatomen, welche gegebenenfalls durch mindestens ein Heteroatom unterbrochen sein kann und wobei die Cycloalkylen-Gruppe gegebenenfalls mehrere Cyclen enthalten kann, so gelten die oben genannten Ausführungen für das Heteroatom. Bei dem Heteroatom, welches gegebenenfalls die Cycloalkylen-Gruppe unterbrechen kann, handelt es sich bevorzugt um Sauerstoff oder Schwefel, besonders bevorzugt um Sauerstoff. Besonders bevorzugt enthält die Cycloalkylen-Gruppe nur ein Heteroatom oder kein Heteroatom. Besonders bevorzugt weist die Cycloalkylen-Gruppe kein Heteroatom auf. Bevorzugt weist die Cycloalkylen-Gruppe mindestens einen, bevorzugt einen Cylcus mit 4 bis 6 Kohlenstoffatomen auf. Insbesondere ist es bevorzugt, dass die Cycloalkylen-Gruppe insgesamt 4 bis 20, bevorzugt 5 bis 15 Kohlenstoffatome und einen Cyclus mit 4 bis 5 Kohlenstoffatomen aufweist. Dabei zählen die Kohlenstoffatome des Cyclus zu der Gesamtkohlenstoffatomanzahl der Cycloalkylen-Gruppe hinzu. Dies bedeutet, dass eine Tetramethylcyclobutenyl-Gruppe insgesamt 8 Kohlenstoffatome aufweist mit einem Cyclus mit 4 Kohlenstoffatomen. Des Weiteren weist die Cycloalkylen-Gruppe mindestens eine Verzweigung auf Die Verzweigungen können in der gegebenenfalls vorhandenen cycloaliphatischen Kette und/oder dem Cyclus vorhanden sein. Bevorzugt sind die Verzweigungen im Cyclus vorhanden.

Unter dem Begriff "Verzweigung" in Bezug auf die Cycloalkylen-Gruppe werden die dem Fachmann bekannten Verzweigungen verstanden. Dies bedeutet, dass die verzweigte Cycloalkylen-Gruppe bevorzugt mindestens ein tertiäres und/oder mindestens ein quartäres Kohlenstoffatom umfasst. Dabei ist es ersichtlich, dass die beiden tertiären Kohlenstoffatome, welche den Cyclus mit der Polymerkette verbinden, erfindungsgemäß nicht als Verzweigungen verstanden werden. Dies bedeutet bevorzugt, dass, wenn die Cycloalkylen-Gruppe zumindest am Cyclus mindestens eine Verzweigung aufweist, dieser Cyclus dann zusätzlich zu den beiden tertiären Kohlenstoffatomen, welche den Cyclus mit der Polymerkette verbinden (siehe auch die "*" in Formel (3)) mindestens ein tertiäres und/oder quartäres Kohlenstoffatom aufweist. Ebenso ist es auch möglich, dass die Verzweigung in einer Alkyl-Gruppe vorhanden ist, welche am Cyclus vorhanden ist (wenn x beispielsweise 2,2-bis(4-cyclohexylen)propan ist). Besonders bevorzugt wird unter "verzweigt" in Bezug auf die Cycloalkylen-Gruppe verstanden, dass die Gruppe mindestens ein quartäres Kohlenstoffatom aufweist.

Bevorzugt handelt sich es bei X um eine Cycloalkylen-Gruppe mit 5 bis 15 Kohlenstoffatomen mit einem Cyclus, welcher gegebenenfalls mindestens eine Verzweigung aufweist, bevorzugt mindestens eine Verzweigung aufweist und mindestens einen Cyclus, bevorzugt einen Cyclus mit 4 bis 6 Kohlenstoffatomen, besonders bevorzugt 4 bis 5 Kohlenstoffatomen aufweist.

Insgesamt ist es erfindungsgemäß bevorzugt, dass die mindestens eine weitere aliphatische Dihydroxy-Verbindung 2 bis 10 Kohlenstoffatome aufweist.

Besonders bevorzugt ist das erfindungsgemäße Verfahren dadurch gekennzeichnet, dass die mindestens eine weitere aliphatische Dihydroxy-Verbindung ausgewählt wird aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, 2,2-bis(4-Hydroxycyclohexyl)propan, Tetrahydro-2,5-furandimethanol, 2-Butyl-2-ethyl-1,3-propandiol, 2-(2-Hydroxyethoxy)ethanol, 2,2,4,4-Tetramethyl-1,3-cyclobutandiol, 2,2,4-Trimethyl-1,3-pentandiol, 2,2-Dimethylpropan-1,3-diol, Cyclobutan-1,1-diyldimethanol, 8-(Hydroxymethyl)-3-tricyclo[5.2.1.02,6]decanyl]methanol, 1,2-Propandiol, 1,3-Propandiol, 1,4-Butandiol, 1,5-Pentandiol, 1,6-Hexandiol, 1,8-Octandiol und beliebigen Mischungen daraus. Insbesondere ist es bevorzugt dass die mindestens eine weitere aliphatische Dihydroxy-Verbindung ausgewählt wird aus der Gruppe, bestehend aus 2-Butyl-2-ethyl-1,3-propandiol, 2-(2-Hydroxyethoxy)ethanol, 2,2,4,4-Tetramethyl-1,3-cyclobutandiol, 2,2,4-Trimethyl-1,3-pentandiol, 2,2-Dimethylpropan-1,3-diol, Cyclobutan-1,1-diyldimethanol, 1,2-Propandiol, 1,3-Propandiol, 1,4-Butandiol, 1,5-Pentandiol, 1,6-Hexandiol, 1,8-Octandiol und beliebigen Mischungen daraus. Ebenso ist es bevorzugt, dass die mindestens eine weitere aliphatische Dihydroxy-Verbindung ausgewählt wird aus der Gruppe, bestehend aus 2-Butyl-2-ethyl-1,3-propandiol, 2,2,4,4-Tetramethyl-1,3-cyclobutandiol, 2,2,4-Trimethyl-1,3-pentandiol, 2,2-Dimethylpropan-1,3-diol, Cyclobutan-1,1-diyldimethanol, 1,4-Butandiol und beliebigen Mischungen daraus. Ganz besonders bevorzugt ist es bevorzugt, dass die mindestens eine weitere aliphatische Dihydroxy-Verbindung ausgewählt wird aus der Gruppe, bestehend aus 2-Butyl-2-ethyl-1,3-propandiol, 2,2,4,4-Tetramethyl-1,3-cyclobutandiol, 2,2,4-Trimethyl-1,3-pentandiol, 2,2-Dimethylpropan-1,3-diol, Cyclobutan-1,1-diyldimethanol und beliebigen Mischungen daraus.

Ebenso ist es bevorzugt, dass das erfindungsgemäße Verfahren dadurch gekennzeichnet ist, dass die mindestens eine weitere aliphatische Dihydroxy-Verbindung ausgewählt wird aus der Gruppe, bestehend aus 2,2-bis(4-Hydroxycyclohexyl)propan, 2-Butyl-2-ethyl-1,3-propandiol, 2,2,4,4-Tetramethyl-1,3-cyclobutandiol, 2,2,4-Trimethyl-1,3-pentandiol, 2,2-Dimethylpropan-1,3-diol, 8-(Hydroxymethyl)-3-tricyclo[5.2.1.02,6]decanyl]methanol und beliebigen Mischungen daraus. Insbesondere ist es bevorzugt dass die mindestens eine weitere aliphatische Dihydroxy-Verbindung ausgewählt wird aus der Gruppe, bestehend aus 2-Butyl-2-ethyl-1,3-propandiol, 2,2,4,4-Tetramethyl-1,3-cyclobutandiol, 2,2,4-Trimethyl-1,3-pentandiol, 2,2-Dimethylpropan-1,3-diol und beliebigen Mischungen daraus. Ebenso ist es bevorzugt, dass die mindestens eine weitere aliphatische Dihydroxy-Verbindung ausgewählt wird aus der Gruppe, bestehend aus 2-Butyl-2-ethyl-1,3-propandiol, 2,2,4,4-Tetramethyl-1,3-cyclobutandiol, 2,2,4-Trimethyl-1,3-pentandiol, 2,2-Dimethylpropan-1,3-diol und beliebigen Mischungen daraus. Ganz besonders bevorzugt ist es bevorzugt, dass die mindestens eine weitere aliphatische Dihydroxy-Verbindung ausgewählt wird aus der Gruppe, bestehend aus 2-Butyl-2-ethyl-1,3-propandiol, 2,2,4,4-Tetramethyl-1,3-cyclobutandiol, 2,2,4-Trimethyl-1,3-pentandiol, 2,2-Dimethylpropan-1,3-diol und beliebigen Mischungen daraus.

Ebenso wird in Verfahrensschritt (i) erfindungsgemäß mindestens eine cyloaliphatische Dicarbonsäure eingesetzt. Dabei ist es bevorzugt, dass die mindestens eine cycloaliphatische Dicarbonsäure ausgewählt ist aus einer Verbindung der chemischen Formel (IIa), (IIb) oder Mischungen davon

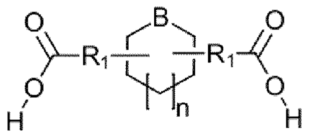
(IIa)

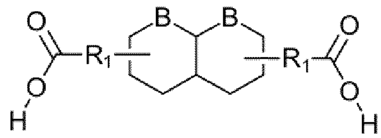
(IIb)

worin

B jeweils unabhängig voneinander für eine $CH_2$-Gruppe oder ein Heteroatom, welches ausgewählt ist aus der Gruppe, bestehend aus O und S, bevorzugt eine $CH_2$-Gruppe oder ein Sauerstoffatom, steht,

$R_1$ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht und

n eine Zahl zwischen 0 und 3, bevorzugt 0 oder 1 ist.

Dabei versteht es sich, dass wenn $R_1$ eine Einfachbindung darstellt, $R_1$ somit Null Kohlenstoffatome umfasst.

Insbesondere ist es bevorzugt, dass die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure Decahydro-2,4-naphtalindicarbonsäure, Decahydro-2,5-naphtalindicarbonsäure, Decahydro-2,6-naphtalindicarbonsäure und Decahydro-2,7-naphtalindicarbonsäure,. Es können auch beliebige Mischungen eingesetzt werden. Ganz besonders bevorzugt handelt es sich um 1,4-Cyclohexandicarbonsäure, 1,3-Cyclohexandicarbonsäure oder 1,2-Cyclohexandicarbonsäure.

Zusätzlich zur cycloaliphatischen Säure können auch noch geringe Menge weitere aliphatische Säuren eingesetzt werden. Besonders bevorzugt sind in Verfahrensschritt (i) zusätzlich bis zu 20 mol-%, weiterhin bevorzugt bis zu 10 mol-% und ganz besonders bevorzugt bis zu 5 mol-% einer weiteren aliphatischen Säure vorhanden, welche keine cycloaliphatische Säure ist. Bevorzugt wird die weitere aliphatische Säure ausgewählt aus der Gruppe, bestehend aus 2,2,4-Trimethyladipinsäure, 2,4,4-Trimethyladipinsäure, 2,2,5-Trimethyladipinsäure und 3,3-Dimethylglutarsäure.

Ebenso wird in Verfahrensschritt (i) erfindungsgemäß mindestens ein Diarylcarbonat eingesetzt. Dabei ist es bevorzugt, dass das mindestens eine Diarylcarbonat ausgewählt wird aus der Gruppe, bestehend aus einer Verbindung der Formel (2)

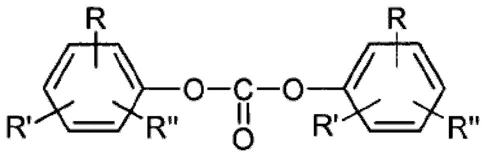

(2)

,

worin

R, R' und R" jeweils unabhängig voneinander gleich oder verschieden sein können und für Wasserstoff, gegebenenfalls verzweigtes C1-C34Alkyl, C7-C34-Alkylaryl, C6-C34-Aryl, eine Nitrogruppe, eine Carbonyl-enthaltende Gruppe, eine Carboxyl-enthaltende Gruppe oder eine Halogengruppe stehen. Bevorzugt sind R, R' und R" jeweils unabhängig voneinander gleich oder verschieden und stehen für Wasserstoff, gegebenenfalls verzweigtes C1-C34Alkyl, C7-C34-Alkylaryl, C6-C34-Aryl, eine Nitrogruppe, eine Carbonyl-enthaltende Gruppe oder eine Halogengruppe. Bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 -phenylethyl)-phenyl-phenyl-carbonat, Di-[4-(1-methyl-1-phenylethyl)-phenyl]-carbonat, Bis(methylsalicyl)carbonat, Bis(ethylsalicyl)carbonat, Bis(propylsalicyl)carbonat, Bis(2-benzoylphenylcarbonat), Bis(phenylslicyl)carbonat und/oder Bis(benzylsalicyl)carbonat. Bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 - Methyl-1 -phenylethyl)-phenyl-phenyl-carbonat, Di-[4-(1-methyl-1-phenylethyl)-phenyl]-carbonat, Bis(2-benzoylphenylcarbonat), Bis(phenylslicyl)carbonat und/oder Bis(benzylsalicyl)carbonat.Insbesondere bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 - phenylethyl)-phenyl-phenyl-carbonat und/oder Di-[4-(1-methyl-1-phenylethyl)-phenyl]-carbonat. Besonders bevorzugt ist das mindestens eine Diarylcarbonat Diphenylcarbonat.

Des Weiteren ist in Verfahrensschritt (i) erfindungsgemäß mindestens ein Katalysator vorhanden. Dabei handelt es sich bevorzugt um eine anorganische Base und/oder einen organischen Katalysator. Besonders bevorzugt handelt es sich bei dem mindestens einen Katalysator um eine anorganische oder organische Base mit einem $pK_B$-Wert von höchstens 5.

Ebenso ist es bevorzugt, dass die mindestens eine anorganische Base oder der mindestens eine organische Katalysator ausgewählt ist aus der Gruppe, bestehend aus Lithium-, Natrium-, Kalium-, Cäsium-, Calcium-, Barium-, Magnesium-, -hydroxide, -carbonate, -halogenide, -phenolate, - diphenolate, -fluoride, -acetate, -phosphate, -hydrogenphosphate, -boranate, Tetramethylammoniumhydroxid, Tetramethylammoniumacetat, Tetramethylammoniumfluorid, Tetramethylammoniumtetraphenylboranat, Tetraphenylphosphoniumfluorid, Tetraphenylphosphoniumtetraphenylboranat, Dimethyldiphenylammoniumhydoxid, Tetraethylammoniumhydroxid, Cethyltrimethylammoniumtetraphenylboranat, Cethyltrimethylammoniumphenolat, Diazabicycloundecen (DBU), Diazabicylononen (DBN), 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexylidendi-1,5,7-triazabi-cyclo-[4,4,0]-dec-5-en, 7,7'-Decylidendi-1,5,7-triazabicyclo-[4,4,0]-dec-5-en, 7,7'-Dodecyliden-di-1,5,7-tri-aza-bicyclo-[4,4,0]-dec-5-en, die Phosphazen-Base P1-t-Oct (tert.-Octyl-imino-tris-(dimethylamino)-phosphoran), die Phosphazen-Base P1-t-Butyl (tert.-Butyl-imino-tris-(dimethylamino)-phosphoran) und 2-tert.-Butylimino-2-diethylamino-1,3-dimethyl-perhydro-1,3,2-diaza-2-phos-phoran (BEMP). Es können auch beliebige Mischungen eingesetzt werden.

Besonders bevorzugt handelt es sich bei dem mindestens einem Katalysator um eine organische Base, bevorzugt die oben genannten, ganz besonders bevorzugt um Alkylamine, Imidazol(derivate), Guanidinbasen wie Triazabicyclodecen, DMAP und entsprechende Derivate, DBN und DBU, am bevorzugsten DMAP. Diese Katalysatoren bringen insbesondere den Vorteil, dass sie im erfindungsgemäßen Verfahrensschritt (ii) mit der bei der Kondensation abgespaltenen chemischen Verbindung beispielsweise durch Vakuum abgetrennt werden können. Dies bedeutet, dass das resultierende Polyestercarbonat nur einen geringen Gehalt bis gar keinen Katalysator mehr enthält. Dies bringt insbesondere den Vorteil, dass keine anorganischen Salze, welche beispielsweise immer über eine Route, bei der Phosgen verwendet wird, anfallen, im Polymer vorhanden sind. Es ist bekannt, dass solche Salze die Stabilität des Polyestercarbonats negativ beeinflussen können, da die Ionen katalytisch bei entsprechender Degradation wirken können.

Der mindestens eine Katalysator wird bevorzugt in Mengen von 1 bis 5000 ppm, vorzugsweise 5 bis 1000 ppm und besonders bevorzugt 20 bis 200 ppm, bezogen auf 1 Mol der cycloaliphatischen Dicarbonsäure, eingesetzt.

In einer anderen Ausführungsform ist das erfindungsgemäße Verfahren dadurch gekennzeichnet, dass die Reaktion in Verfahrensschritt (i) in Anwesenheit mindestens eines ersten Katalysators und / oder eines zweiten Katalysators durchgeführt wird und die Aufkondensation in Verfahrensschritt (ii) mindestens in Anwesenheit des ersten Katalysators und des zweiten Katalysators durchgeführt wird, wobei der erste Katalysator mindestens eine tertiäre Stickstoffbase ist, der zweite Katalysator mindestens eine basische Verbindung, bevorzugt ein basisch wirkendes Alkalimetallsalz ist und wobei der Anteil der Alkalimetallkationen in Verfahrensschritt (ii) 0,0008 bis 0,0050 Gew.-%, bezogen auf alle im Verfahrensschritt (i) eingesetzten Komponenten, beträgt.

Damit ist in dieser Ausführungsform ein erster Katalysator und / oder ein zweiter Katalysator anwesend in Verfahrensschritt (i) anwesend.

Bei dem erstem Katalysator handelt es sich um eine tertiäre Stickstoffbase. Bevorzugt ist dieser erste Katalysator ausgewählt aus von Guanidin abgeleiteten Basen, 4-Dimethylaminopyridin (DMAP), 1,8-Diazabicyclo [5.4.0]undec-7-en, 1,5-Diazabicyclo[4.3.0]non-5-en, 1,5,7-Triazabicyclo[4.4.0]dec-5-en, Hexamethylphosphorimidtriamid, 1,2 Dimethyl-1,4,5,6-tretrahydropyridin, 7-Methyl-1,5,7-triazabicyclodec-5-en, 1,8-Diazabicyclo[5.4.0]undec-7-en (DBU), DBN, Ethylimidazol, N,N-Di-isopropyl ethylamin (Hünigs Base), Pyridin, TMG sowie Mischungen dieser Substanzen. Weiter bevorzugt wird der erste Katalysator ausgewählt aus Guanidin abgeleiteten Basen, 4-Dimethylaminopyridin (DMAP), 1,8-Diazabicyclo[5.4.0]undec-7-en, 1,5-Diazabicyclo[4.3.0]non-5-en, 1,5,7-Triazabicyclo[4.4.0]dec-5-en. Besonders bevorzugt wird 4-Dimethylaminopyridin eingesetzt.

Der erste Katalysator wird bevorzugt in einer Menge von 0,002 bis 0,10 Gew.-%, weiter bevorzugt in einer Menge von 0,005 bis 0,050 Gew, besonders bevorzugt in einer Menge von 0,008 bis 0,030 Gew, jeweils bezogen auf alle im Verfahrensschritt (i) eingesetzten Komponenten.

Es ist bevorzugt, dass der zweite Katalysator ausgewählt ist aus der Gruppe bestehend aus anorganischen oder organischen Alkalisalzen und anorganischen oder organischen Erdalkalisalzen. Weiterhin bevorzugt, handelt es sich bei den in Verfahrensschritt (ii) enthaltenen Alkalimetallkationen um Lithiumkationen, Kaliumkationen, Natriumkationen, Cäsiumkationen und Mischungen daraus.

Der eingesetzte zweite Katalysator ist das organische oder anorganische Alkali- oder Erdalkalisalz bevorzugt einer schwachen Säure (pKs zwischen 3 und 7 bei 25 °C). Geeignete schwache Säuren sind z.B. Carbonsäuren, bevorzugt C2- C22 Carbonsäuren, wie Essigsäure, Proprionsäure, Ölsäure, Stearinsäure, Laurinsäure, Benzoesäure, 4-Methoxybenzoesäure, 3-Methylbenzoesäure, 4-tert.-Butylbenzoesäure, p-Toluolessigsäure, 4-Hydroxybenzoesäure, Salicylsäure, Teilester von Polycarbonsäuren, wie z.B. Monoester von Bernsteinsäure , verzweigte aliphatische Carbonsäuren, wie 2,2-Dimethylpropansäure, 2,2-Dimethylpropansäure, 2,2- Dimethylbutansäure, 2-Ethylhexansäure. Ebenso ist es aber auch möglich, dass das organische oder anorganische Alkali- oder Erdalkalisalz einer starken Säure wie zum Beispiel Salzsäure eingesetzt wird.

Geeignete organische und anorganische Salze sind oder sind abgeleitet von Natriumhydrogencarbonat, Kaliumhydrogencarbonat, Lithiumhydrogencarbonat, Natriumcarbonat, Lithiumcarbonat, Kaliumcarbonat, Natriumacetat, Kaliumacetat, Lithiumacetat, Natriumstearat, Kaliumstearat, Lithiumstearat, Natriumoleat, Lithiumoleat, Kaliumoleat, Natriumbenzoat, Kaliumbenzoat, Lithiumbenzoat, Dinatrium-, Dikalium-, und Dilithiumsalze von BPA. Ferner können Calciumhydrogencarbonat, Bariumhydrogencarbonat, Magnesiumhydrogencarbonat, Strontiumhydrogencarbonat, Calciumcarbonat, Bariumcarbonat, Magnesiumcarbonat, Strontiumcarbonat, Calciumacetat, Bariumacetat, Magnesiumacetat, Strontiumacetat, Calciumstearat, Bariumstearat, Magnesiumstearat und entsprechende Oleate eingesetzt werden.

Weiterhin können entsprechende Salze von Phenolen, insbesondere von Phenol eingesetzt werden. Diese Salze können einzeln oder im Gemisch eingesetzt werden.

Der zweite Katalysator ist bevorzugt ausgewählt aus der Gruppe bestehend aus Natriumhydroxid, Lithiumhydroxid, Natriumphenolat, Lithiumphenolat, Natriumbenzoat, Lithiumbenzoat, Lithiumchlorid, Lithiumacetylacetonatund Cäsiumcarbonat sowie Mischungen dieser Substanzen. Besonders bevorzugt werden Natriumphenolat, Lithiumphenolat, Natriumhydroxyd, Lithiumhydroxyid, Natriumbenzoat, Lithiumbenzoat, Lithiumchlorid und/oder Lithiumacetylcetonat eingesetzt. Lithiumchlorid wird bevorzugt als wässrige Lösung eingesetzt, beispielsweise in Form einer 15-%igen Lösung.

Es wurde festgestellt, dass das molare Verhältnis aller in Verfahrensschritt (i) anwesenden aliphatischen Dihydroxy-Verbindungen zu allen in Verfahrensschritt (i) anwesenden cycloaliphatischen Dicarbonsäuren vor der Reaktion in Verfahrensschritt bevorzugt (i) 1:0,6 bis 1:0,05, weiter bevorzugt 1:0,5 bis 1:0,15 und ganz besonders bevorzugt 1:0,4 bis 1:0,2 beträgt.

Bevorzugt soll das Verhältnis von aliphatischen Dihydroxy-Verbindungen und cycloaliphatischen Dicarbonsäuren im späteren Polyestercarbonat nicht zu hoch sein (d.h. nicht zu wenig cycloaliphatischen Dicarbonsäuren eingebaut), um besonders günstige mechanische Eigenschaften, gute Chemikalienbeständigkeit und gute Verarbeitungseigenschaften zu erreichen. Polymere mit einem hohen Gehalt Einheiten abgeleitet von Dihydroxy-Verbindungen wie beispielsweise Isosorbid sind meistens sehr starr und weisen daher ungenügende mechanische Eigenschaften auf. Ist der Gehalt von cycloaliphatischen Dicarbonsäuren abgeleiteten Einheiten zu gering, wird auch die Verarbeitungsfähigkeit der Polymere schlechter. Zudem führen die Polyestereinheiten in der Regel zu einer besseren Chemikalienbeständigkeit des Polyestercarbonats, weshalb der Gehalt an von cycloaliphatischen Dicarbonsäuren abgeleiteten Einheiten ebenfalls nicht zu gering sein sollte.

Erfindungsgemäß ist es besonders bevorzugt, dass das molare Verhältnis aller in Verfahrensschritt (i) anwesenden aliphatischen Dihydroxy-Verbindungen zu allen in Verfahrensschritt (i) anwesenden cycloaliphatischen Dicarbonsäuren vor der Reaktion in Verfahrensschritt (i) 1:0,6 bis 1:0,05 bevorzugt 1:0,55 bis 1:0,1, besonders bevorzugt 1:0,5 bis 1:0,15 beträgt. Es hat sich erfindungsgemäß herausgestellt, dass insbesondere in diesem Bereich der Molekulargewichtsaufbau und damit die Oberflächenerneuerung besonders gut ist.

Erfindungsgemäß ist es besonders vorteilhaft, wenn im erfindungsgemäßen Verfahren

- 60 bis 90 Teile Isosorbid, bevorzugt 65 - 85 Teile Isosorbid, bzw. Isosorbidisomer
- 40 bis 10 Teile cycloaliphatische Dicarbonsäure, bevorzugt 35 - 15 Teile cycloaliphatische Dicarbonsäure, bevorzugt 1,4 Cyclohexandicarbonsäure

2 bis 25 mol-%, bevorzugt 3 bis 20 mol % insbesondere bevorzugt 4 bis 18 mol-% an Isosorbid durch das mindestens eine weitere aliphatische Diol, insbesondere lineares, ganz bevorzugt verzweigtes Diol mit 2 bis 10 Kohlenstoffatomen ersetzt werden. Die Gesamtmenge an dem mindestens einem aliphatischen Diol in der Gesamtzusammensetzung beträgt dabei bevorzugt weniger als 20 mol-%, insbesondere weniger als 15 mol %.

Das erfindungsgemäße Verfahren ist dadurch gekennzeichnet, dass Kohlenstoffdioxid während des Verfahrens freigesetzt wird. Erfindungsgemäß wird in Verfahrensschritt (i) bevorzugt Kohlenstoffdioxid abgespalten (siehe Reaktionsschema oben). Diese Verfahrensweise erlaubt eine schnelle Reaktion unter geringer Temperaturbelastung.

Des Weiteren umfasst der erfindungsgemäße Verfahrensschritt (i) bevorzugt mindestens einen, besonders bevorzugt alle der folgenden Schritte (ia) bis (ic):

(ia) Aufschmelzen aller in Verfahrensschritt (i) anwesenden Komponenten, also mindestens der mindestens einen cycloaliphatischen Dicarbonsäure, des mindestens einen Diarylcarbonats und zumindest der Komponenten (A) und (B) in Anwesenheit des mindestens einen Katalysators. Dies erfolgt bevorzugt unter Schutzgasatmosphäre, bevorzugt unter Stickstoff und/oder Argon. Bevorzugt erfolgt der Schritt (ia) in Abwesenheit eines Lösungsmittels. Der Begriff "Lösungsmittel" ist in diesem Zusammenhang dem Fachmann bekannt. Erfindungsgemäß wird unter dem Begriff "Lösungsmittel" bevorzugt eine Verbindung verstanden, die in keinem der Verfahrensschritte (i) und (ii) eine chemische Reaktion eingeht. Ausgenommen sind solche Verbindungen, welche durch die Reaktion entstehen (beispielsweise Phenol, wenn Diphenylcarbonat als das mindestens eine Diarylcarbonat eingesetzt wird). Selbstverständlich kann nicht ausgeschlossen werden, dass die Ausgangsverbindungen Spuren von Lösungsmitteln enthalten. Dieser Fall soll erfindungsgemäß bevorzugt umfasst sein. Jedoch wird erfindungsgemäß bevorzugt ein aktiver Schritt der Zugabe eines solchen Lösungsmittels vermieden.

(ib) Erhitzen des Gemisches, bevorzugt der aus Schritt (ia) erhaltenen Schmelze. Dabei können Schritt (ia) und Schritt (ib) auch überlappen, da zur Erzeugung einer Schmelze in Schritt (ia) ebenfalls ein Erhitzen notwendig sein kann. Das Erhitzen erfolgt bevorzugt zunächst auf 150 °C bis 180 °C.

(ic) Reaktion des Gemisches, bevorzugt des aus Schritt (ib) erhaltenen Gemisches unter Einbringung von Mischenergie, bevorzugt durch Rühren. Auch hier kann der Schritt (ic) mit dem Schritt (ib) überlappen, da durch das Erhitzen bereits die Reaktion des Gemisches initiiert werden kann. Bevorzugt ist die Schmelze dabei bereits durch Schritt (ib) unter Normaldruck auf Temperaturen zwischen 150 und 180 °C aufgeheizt. Je nach gewähltem Katalysator kann die Temperatur im Bereich 160 - 200 °C belassen werden. Alternativ wird die Temperatur in Schritt (ic) schrittweise - je nach beobachteter Reaktivität - auf 200°C - 300 °C, bevorzugt 210 - 260 °C, insbesondere

bevorzugt 215 - 240 °C erhöht. Die Reaktivität kann über die Gasentwicklung auf dem Fachmann bekannte Weise abgeschätzt werden. Prinzipiell sind auch höhere Temperaturen in diesem Schritt möglich, jedoch kann es bei höheren Temperaturen zu Nebenreaktionen kommen (z.B. Verfärbungen). Daher sind höhere Temperaturen weniger bevorzugt. Man rührt solange unter Normaldruck, bis die Gasentwicklung im Wesentlichen stoppt. Erfindungsgemäß ist es möglich, dass unter diesen Bedingungen der durch die Reaktion der mindestens einen Carbonsäure mit dem mindestens einen Diarylcarbonat enstehende Arylalkohol (beispielsweise Phenol bei der Verwendung von Diphenylcarbonat) bereits teilweise mit entfernt wird.

Ebenso wurde erfindungsgemäß beobachtet, dass mindestens eine der Dihydroxyverbindung (A) und/oder (B) ebenfalls zu diesem Zeitpunkt schon Reaktionen eingegangen ist. So konnten Oligomere, umfassend Carbonateinheiten aus der Reaktion der mindestens einen der Dihydroxy-Verbindung (A) und/oder (B) mit dem mindestens einen Diarylcarbonat und/oder Estereinheiten aus der Reaktion der mindestens einen der Dihydroxy-Verbindung (A) und/oder (B) mit der mindestens einen Dicarbonsäure nachgewiesen werden.

Daher ist es erfindungsgemäß bevorzugt, dass das aus Verfahrensschritt (i) erhaltene Gemisches vor Durchführung des Verfahrensschritts (ii) Oligomere, umfassend Carbonateinheiten aus der Reaktion mindestens einer der Dihydroxy-Verbindung (Komponente (A) und/oder (B)) mit dem mindestens einen Diarylcarbonat und/oder Estereinheiten aus der Reaktion mindestens einer der Dihydroxy-Verbindung (Komponente (A) und/oder (B)), umfasst.

Die Reaktionszeit in Schritt (ic) hängt von der Menge der Einsatzstoffe ab. Bevorzugt liegt die Reaktionszeit des Schritts (ic) zwischen 0,5 h bis 24 h, bevorzugt zwischen 0,75 h und 5 h und insbesondere bevorzugt zwischen 1 h und 3 h. Dabei ist es bevorzugt, die Reaktionszeit so zu wählen, dass die Gasentwicklung im Wesentlichen nachgelassen hat (siehe Reaktionsschema oben).

Erfindungsgemäß ist es bevorzugt, dass das molare Verhältnis der Summe aller in Verfahrensschritt (i) anwesenden Dihydroxy-Verbindungen und aller in Verfahrensschritt (i) anwesenden cycloaliphatischen Dicarbonsäuren zu allen in Verfahrensschritt (i) anwesenden Diarylcarbonaten vor der Reaktion in Verfahrensschritt (i) 1:0,4 bis 1:1,6 , bevorzugt 1:0,5 bis 1:1,5, weiterhin bevorzugt, 1:0,6 bis 1:1,4, besonders bevorzugt 1:0,7 bis 1:1,3, insbesondere bevorzugt 1:0,8, bis 1:1,2 und ganz besonders bevorzugt 1:0,9 bis 1: 1,1 beträgt. Der Fachmann ist in der Lage, entsprechende optimal geeignete Verhältnisse je nach Reinheit der Ausgangssubstanzen auszuwählen.

**Verfahrensschritt (ii)**

In Verfahrensschritt (ii) erfolgt die weitere Aufkondensation des aus Verfahrensschritt (i) erhaltenen Gemisches zumindest unter Entfernung der bei der Kondensation abgespaltenen chemischen Verbindung. Unter dem Ausdruck "weitere" Aufkondensation ist erfindungsgemäß zu verstehen, dass in Verfahrensschritt (i) zumindest teilweise bereits eine Kondensation stattgefunden hat. Dabei handelt es sich bevorzugt um die Reaktion der mindestens einen cycloaliphatischen Dicarbonsäure mit dem mindestens einen Diarylcarbonat unter Abspaltung eines Arylalkohols. Bevorzugt hat jedoch auch schon eine weitere Kondensation hin zu Oligomeren stattgefunden (siehe dazu Verfahrensschritt (i)).

Wenn im Verfahrensschritt (i) nur der erste Katalysator oder nur der zweite Katalysator eingesetzt wurde, so wird der im Verfahrensschritt (i) nicht eingesetzte Katalysator im Verfahrensschritt (ii) hinzugefügt.

Der Anteil der Alkalimetallkationen in Verfahrensschritt (ii) beträgt bevorzugt 0,0009 bis 0,0005 Gew.-% und besonders bevorzugt 0,0010 bis 0,0045 Gew.-%, jeweils bezogen auf alle im Verfahrensschritt (i) eingesetzten Komponenten.

In bevorzugter Ausführungsform sind der erste Katalysator und der zweite Katalysator in Verfahrensschritt (i) anwesend.

Es ist auch möglich, in Verfahrensschritt (i) eine Teilmenge des ersten Katalysators und / oder eine Teilmenge des zweiten Katalysators einzusetzen und dann den jeweiligen Rest in Verfahrensschritt (ii).

Bevorzugt wird aber in Verfahrensschritt (i) die Gesamtmenge des ersten und / oder des zweiten Katalysators eingesetzt. Am meisten bevorzugt wird in Verfahrensschritt (i) die Gesamtmenge beider Katalysatoren eingesetzt.

Der Begriff "Kondensation" ist dem Fachmann bekannt. Bevorzugt wird hierunter eine Reaktion verstanden, bei der sich zwei Moleküle (des gleichen Stoffes oder verschiedener Stoffe) zu einem größeren Molekül vereinigen, wobei ein Molekül einer chemisch einfachen Substanz abgespalten wird. Diese bei der Kondensation abgespaltene Verbindung wird in Verfahrensschritt (ii) entfernt. Dabei ist es bevorzugt, dass die bei der Kondensation abgespaltenen chemischen Verbindung in Verfahrensschritt (ii) mittels Vakuum entfernt wird. Demgemäß ist es bevorzugt, dass das erfindungsgemäße Verfahren dadurch gekennzeichnet ist, dass während der Reaktion in Verfahrensschritt (i) die flüchtigen Bestandteile, welche einen Siedepunkt unterhalb des in Verfahrensschritt (i) gebildeten cycloaliphatischen Diesters, des Gemischs an Dihydroxy-Verbindung und unterhalb des mindestens einen Diarylcarbonats aufweisen, gegebenenfalls unter schrittweiser Reduzierung des Drucks abgetrennt werden. Eine schrittweise Abtrennung wird dabei bevorzugt gewählt, wenn unterschiedliche flüchtige Bestandteile abgetrennt werden. Ebenso bevorzugt wird eine schrittweise Abtrennung gewählt, um eine möglichst vollständige Abtrennung des oder der flüchtigen Bestandteils/e zu gewährleisten.

Bei den flüchtigen Bestandteilen handelt es sich um die bei der Kondensation abgespaltenen chemischen Verbindung bzw. Verbindungen.

Eine schrittweise Absenkung des Drucks kann z.B. derart erfolgen, dass sobald die Kopftemperatur fällt der Druck gesenkt wird, um eine kontinuierliche Entfernung der bei der Kondensation abgespaltenen chemischen Verbindung zu gewährleisten. Wenn ein Druck von 1 mbar, bevorzugt <1mbar erreicht ist, wird weiterhin kondensiert, bis die gewünschte Viskosität erreicht ist. Dies kann z.B. durch Drehmomentkontrolle erfolgen d.h. die Polykondensation wird bei Erreichen des gewünschten Drehmoments des Rührers abgebrochen.

Die Abtrennung des Kondensationsproduktes in Verfahrensschritt (ii) erfolgt bevorzugt bei Temperaturen von 200 °C bis 280 °C, besonders bevorzugt 210 °C bis 260 °C und insbesondere bevorzugt 220 °C bis 250 °C. Weiterhin bevorzugt beträgt das Vakuum bei der Abtrennung 500 mbar bis 0,01 mbar. Insbesondere ist es bevorzugt, dass die Abtrennung schrittweise durch Reduktion des Vakuums erfolgt. Ganz besonders bevorzugt beträgt das Vakuum in der letzten Stufe 10 mbar bis 0,01 mbar.

**[0104]** , Das erfindungsgemäße Polyestercarbonat kann als solches zu Formkörpern aller Art verarbeitet werden. Es kann auch mit anderen Thermoplasten und/oder Polymeradditiven zu thermoplastischen Formmassen verarbeitet werden. Die Formmassen und Formkörper sind weitere Gegenstände der vorliegenden Erfindung.

Die Polymeradditive werden bevorzugt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Farbstoffen und Pigmenten, Schlagzähigkeitsmodifikatoren sowie Füll- und Verstärkungsstoffen.

Die thermoplastischen Formmassen können beispielsweise hergestellt werden, indem man das Polyestercarbonat und die weiteren Bestandteile in bekannter Weise vermischt und bei Temperaturen von bevorzugt 200°C bis 320°C, in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Formkörper aus dem erfindungsgemäßen Polyestercarbonat oder den das Polyestercarbonat enthaltenden thermoplastischen Formmassen können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele

Verwendete Materialien:

Cyclohexandicarbonsäure: 1,4-Cyclohexandicarbonsäure; CAS 1076-97-7 99 %; Tokyo Chemical Industries, Japan, abgekürzt als CHDA. Die CHDA enthielt gemäß einer Elementaranalyse weniger als 1ppm Natrium

Diphenylcarbonat: Diphenylcarbonat, 99,5 %, CAS 102-09-0; Acros Organics, Geel, Belgien, abgekürzt als DPC

4-Dimethylaminopyridin: 4-(Dimethylaminopyridin; ≥98,0 %; purum; CAS 1122-58-3; Sigma-Aldrich, München Deutschland, abgekürzt als DMAP

Isosorbid: Isosorbid (CAS: 652-67-5), 99,8 %, Polysorb PS A; Roquette Freres (62136 Lestrem, Frankreich); abgekürzt als ISB

Lithiumhydroxid-monohydrat (CAS: 1310-66-3); >99,0 %; Sigma- Aldrich

2-Butyl-2-ethyl-1,3-propandiol: CAS-Nr.: 115-84-4; Aldrich (abgekürzt als BEPD)

2,2,4,4 Tetramethyl-1,3-cyclobutandiol: , 98 % (CAS: 3010-96-6); ABCR (abgekürzt als TMCBD)

2,2,4-Trimethyl-1,3-pentandiol; CAS-Nr.: 144-19-4 ; Aldrich (abgekürzt als TMPD)

Neopentylglykol (2,2-Dimethylpropan-1,3-diol); CAS: 126-30-7; Aldrich (abgekürzt als NPG)

1,4-Butandiol: CAS: 110-63-4; Merck 99%; (abgekürzt als BDO)

1,4-Cyclohexandimethanol: CAS: 105-08-8, Aldrich 99% (abgekürzt als CHDM)

1,12-Dodecandiol: CAS: 5675-51-4, Aldrich 99% (abgekürzt als DDD)

Analytische Methoden:

Lösungsviskosität

Die relative Lösungsviskosität (ηrel; auch als eta rel bezeichnet) wurde in Dichlormethan bei einer Konzentration von 5 g/l bei 25 °C mit einem Ubbelohdeviskosimeter bestimmt. Die Bestimmung erfolgte nach DIN 51562-3; 1985-05. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.Bestimmung der Glastemperatur

Die Glastemperatur wurde mittels dynamischer Differenzkalorimetrie (DSC) gemäß der Norm DIN EN ISO 11357-1:2009-10 und ISO 11357-2:2013-05 bei einer Heizrate von 10 K/min unter Stickstoff mit Bestimmung der Glastemperatur (Tg) gemessen als Wendepunkt im zweiten Aufheizvorgang bestimmt. Zugversuche

Das Produkt wurde in Dichlormethan gelöst und mit ca. 50mg Phosphonsäure (in aq.) neutralisiert. Nach dem Homogenisieren wurde das Dichlormethan an der Raumluft abgedampft und der Rest bei ca. 60°C im Vakuumtrockenschrank bei bestmöglichem Vakuum entfernt. Für die folgende mechanische Zerkleinerung wurden eine Handhebelmaschine und eine Retschmühle mit einer Siebgröße von 1,5mm eingesetzt. Die Vortrocknung bei 70°C und <50mbar im Vakuumtrockenschrank erfolgte für ca. 16h. Anschließend wurde die Temperatur auf 110°C erhöht und die Trocknung für 5h fortgesetzt.

Für die Zugversuche wurden die in der Schmelzpresse erzeugten Filme in 5 mm breite Streifen mit einer Länge von mindesten 50 mm geschnitten. Die Zugprüfung wurde in Anlehnung an die Norm ASTM D 638 durchgeführt. Die Streifen wurden bei einer Raumtemperatur von ca. 25 °C und einer relativen Luftfeuchte von ca. 20 % gezogen. Die Ermittlung des Zugmoduls erfogte bei einer Vorspannung von 0,01 MPa mit einer Prüfgeschwindigkeit von 100 mm/min. Die Prüfgeschwindigkeit der laufenden Messung betrug 50 mm/min. Die Umschaltung der Dehngeschwindigkeit von 100 mm/min auf 50 mm/min erfolgte lagegeregelt über den Traversenweg. Die Einspannlänge lag bei 20 mm. Es war kein Klemmenbruch zu verzeichnen. Die Ergebnisse der Zugprüfungen sind als Durchschnittswerte aus jeweils fünf Einzelmessungen zusammengefasst.

Das Fließverhalten wird durch die Bestimmung der Schmelzviskosität mittels eines Platte-Platte-Viskosimeters gemäß ISO 6721-10 aus 1999 ermittelt. Dabei wird der Wert der Viskosität bei 1 Herz sowie bei 10 Herz herangezogen: Die Schmelzviskositäten wurden mit einem Ares G-2 Rotationsrheometer der Firma TA Instruments (New Castle, DE 19720, USA) bestimmt. Es wurde eine Platte-Platte Geometrie verwendet (25 mm Durchmesser). Der Plattendurchmesser beläuft sich auf 25 mm (PP25). Die Proben wurden, wenn es sich um Eindampfrückstände handelte zunächst im Vakuumtrockenschrank bei ca. 80°C getrocknet und anschließend bei 240 °C mit einer Heißpresse zu dünnen Filmen verpresst. Die Proben wurden bei unterschiedlichen Temperaturen oberhalb der Glastemperatur gemessen. Die Deformation während der Messung wurde so gewählt, dass die Messung im linear elastischen Bereich durchgeführt wurde. Die Messergebnisse bei den unterschiedlichen Temperaturen wurden nachträglich mittels Zeit-Temperatur-Superposition auf eine Masterkurve bei der Referenztemperatur 200°C verschoben.

Vergleichsbeispiel 1 (Versuch ohne zusätzliches Diol)

17,20 g (0,10 Mol) 1,4-Cyclohexandicarbonsäure und 29,83 g (0,204 Mol) Isosorbid sowie 64,30 g ( 0,3 Mol) Diphenylcarbonat, 0,0111 g DMAP (4-Dimethylaminopyridin; 100 ppm bezogen auf die Einsatzstoffe CHDA, DPC und ISB) sowie 115 μl einer wässrigen Lösung von Lithiumhydroxid (100 g/l), entsprechend ca. 30 ppm Li, wurden in einem Kolben mit Kurzwegabscheider vorgelegt. Das Gemisch wurde durch 4-faches evakuieren und belüften mit Stickstoff von Sauerstoff befreit. Das Gemisch wurde aufgeschmolzen und bei Normaldruck auf 160 °C unter Rühren erwärmt. Das Gemisch wurde für 40 Minuten bei 160 °, für 60 Minuten bei 175 °C, für 30 Minuten bei 190 °C sowie für 10 Minuten bei 205 °C gerührt. Dabei entwickelt sich kontinuierlich Kohlenstoffdioxid. Nach Versiegen der $CO_2$ Entwicklung wurde die Badtemperatur auf 220 °C eingestellt. Nach weiteren 20 Minuten wurde Vakuum angelegt. Der Druck wurde innerhalb von

30 Minuten auf 10 mbar gesenkt. Dabei wurde kontinuierlich Phenol entfernt. Bei 10 mbar wurde ca. 10 Minuten gerührt. Dann wurde der Druck auf <1mbar (ca. 0,7 mbar) gesenkt und weitere 10 Minuten kondensiert. Danach wurde der Ansatz abgestellt.

Man erhielt ein hellbgelbes Polymer mit einer Lösungsviskosität von eta rel 1,33

Die weiteren Beispiele (Bsp.) und Vergleichsbeispiele (Vgl.) wurden wie für Vergleichsbeispiel 1 angegeben durchgeführt. Abweichend von Beispiel 1 wurden zusätzlich die in Tabelle 1 jeweils angegebenen aliphatische Diolen in den Kolben mit Kurzwegabscheider mit allen anderen das Polymer bildenden Monomeren sowie dem Katalysator vorgelegt.

**Tabelle 1:**

| | Vgl. 1 | Erf. 1 | Erf. 2 | Erf. 3 | Erf. 4 | Erf. 5 | Erf. 6 | Erf. 7 | Erf. 8 | Erf. 9 | Vgl.. 2 | Vgl. 3 | Vgl. 4 | Vgl. 5 | Vgl.6 | Vgl.7 |
|---|---|---|---|---|---|---|---|---|---|---|---|---|---|---|---|---|
| mol. Verhältnis CHDA/ISB/-HO-R-OH | 33/67/0 | 33/64/3 | 33/60/7 | 33/57/10 | 33/64/3 | 33/57/10 | 33/60/7 | 33/64/3 | 33/64/3 | 33/57/10 | 33/64/3 | 33/64/3 | 33/57/10 | 33/33,5/33,5 | 33/33,5/33,5 | 33/33,5/3 3,5 |
| mol-% HO-R-OH | 0 | 5 | 10 | 15 | 5 | 15 | 10 | 5 | 5 | 15 | 5 | 5 | 15 | 50 | 50 | 50 |
| CHDA (mol) ca. | 0,1 | 0,2 | 0,2 | 0,2 | 0,2 | 0,2 | 0,1 | 0,1 | 0,1 | 0,1 | 0,1 | 0,1 | 0,1 | 0,1 | 0,1 | 0,1 |
| HO-R-OH ca. (mol) | 0 | 0,02 TMPD | 0,04 TMPD | 0,06 TMPD | 0,02 NPG | 0,06 NPG | 0,02 BEPD | 0,01 BEPD | 0,01 TMCB D | 0,03 TMCBD | 0,01 BDO | 0,01 CHDM | 0,03 DDD | 0,1 TMPD | 0,1 NPG | 0,1 DDD |
| DPC (mol) ca. | 0,3 | 0,6 | 0,6 | 0,6 | 0,6 | 0,6 | 0,3 | 0,3 | 0,3 | 0,3 | 0,3 | 0,3 | 0,3 | 0,3 | 0,3 | 0,3 |
| ISB (mol) ca. | 0,2 | 0,38 | 0,36 | 0,34 | 0,38 | 0,34 | 0,18 | 0,19 | 0,19 | 0,17 | 0,19 | 0,19 | 0,17 | 0,1 | 0,1 | 0,1 |
| Eta rel | 1,33 | 1,383 | 1,362 | 1,647 | 1,413 | 1,446 | 1,501 | 1,474 | 1,434 | 1,606 | 1,396 | 1,41 | 1,301 | 1,094 | 1,119 | 1,149 |
| Glasübergangstemperatur in °C | 151 | 144 | 146 | 138 | 150 | 147 | 133 | 142 | 154 | 153 | 145 | 145 | 94 | 94 | 84 | gelartig bei Raumte mperatur |
| Zugmodul (E-Modul) N/mm$^2$ | 1740 ± 128 | | 283 ± 64 | 1130 ± 183 | | 1020 ± 55,8 | 1210 ± 110 | 917 ± 145 | 79,6 ± 29,3 | 135 ± 75,4 | 83,5 ± 7 | 258 ± 128 | 998 ± 88 | Nicht messbar | Nicht messbar | Nicht messbar |
| Bruchdehnung (DR) % | 8,8 ± 0,9 | | 8,3 ± 2,8 | 7,6 ± 1,5 | | 16,7 ± 13,5 | 10,0 ± 1,5 | 8,5 ± 2,4 | 6,2 ± 1,2 | 5,7 ± 1,7 | 10,2 ± 3,6 | 7,0 ± 0,8 | 7,7 ± 0,6 | Nicht messbar | Nicht messbar | Nicht messbar |
| Scherviskosität bei 1 Hz | | | | | | | | 27840 Pas | 35920 Pas | | | 60960 Pas | | | | |
| Scherviskosität bei 10 Hz | | | | | | | | 8160 Pas | 7760 Pas | | | 15470 Pas | | | | |

Die mol-Angaben in der ersten Spalte der Tabelle 1 sind mit "ca." angegeben, da auf die zweite Nachkommastelle gerundet wurde. Es wurde das Verhältnis 2,04:1,00 (Diole zu Disäuren) zu Grunde gelegt.

Die erfindungsgemäßen Beispiele 1 bis 9 zeigen, dass das erfinderische Verfahren die gewünschten Polyestercarbonate in hohen Viskositäten liefert solange die erfindungsgemäßen Mengen an zusätzlichem Diol eingehalten werden. Dabei erkennt man, dass der Zusatz eines weiteren aliphatischen, verzweigten Diolsdas Molekulargewicht deutlich ansteigen lässt im Verhältnis zu einem Beispiel, in dem kein weiteres aliphatisches Diol anwesend ist (siehe Vergleichsbeispiel 1). Dabei konnte bei höheren Temperaturen eine besserer Vermischbarkeit beobachtet werden, so dass ein weiterer Molekulargewichtsaufbau stattfinden konnte. Wird eine zu hohe Menge an zusätzlichem Diol eingesetzt (siehe Vergleichsbeispiele 5 bis 7), dann ist der Molekulargewichtsaufbau deutlich geringer. Zudem ist erkennbar, dass die Anwesenheit einer Struktureinheit (B) im Polyestercarbonat zunächst die mechanischen Eigenschaften, wie E-Modul und Bruchdehnung herabsetzt, jedoch insgesamt ein höheres Molekulargewicht erreicht werden kann. Je höher der Anteil an Struktureinheit (B), desto besser werden die mechanischen Eigenschaften wie E-Modul und Bruchdehnung. Allerdings führt ein zu hoher Anteil an Struktureinheit (B) wiederum zu einem geringen Molekulargewicht und somit wieder zu einer Verschlechterung der mechanischen Eigenschaften. Im erfindungsgemäßen Mengenbereich der Struktureinheit (B) wird somit eine gute Balance zwischen mechanischen Eigenschaften und Molekulargewicht erzielt. Zudem führen hohe Molekulargewichte zu niedrigeren Endgruppengehalten. Dies ist prinzipiell vorteilhaft, da ein Molekulargewichtsabbau in der Regel vom Kettenende her ausgeht.

Es ist zu beachten, dass die Fehlerwerte des E-Moduls und der Bruchdehnung relativ hoch sind. Dies resultiert daraus, dass relativ geringe Probenmengen eingesetzt wurden und es teilweise zur Blasenbildung kam. Dem Fachmann ist aber verständlich, dass trotz dieser Fehler die resultierenden Werte aussagekräftig sind.

Ebenso kann gesehen werden, dass unter Verwendung von zusätzlichen Diolen mit Verzweigungen (sowohl verzweigte Alkylen-Gruppen als auch verzweigte Cycloalkylen-Gruppen) trotz höherer Lösungsviskosität und bei vergleichbaren Tg-Werten eine geringere Scherviskosität resultiert.

1. Polyestercarbonat, umfassend die Strukturformel (1)

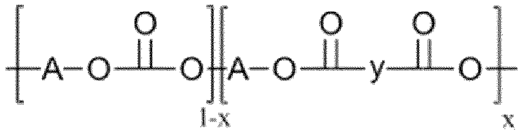

(1),

in der

A pro Wiederholungseinheit unabhängig voneinander zumindest entweder Struktureinheit (A) oder Struktureinheit (B) darstellt, wobei

(A) für die chemische Formel (2) steht

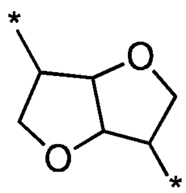

(2)

und

(B) für die chemische Formel (3) steht

*-x-* (3),

wobei x für eine verzweigte Alkylen-Gruppe mit 4 bis 20, bevorzugt 5 bis 15 Kohlenstoffatomen, welche gegebenenfalls durch mindestens ein Heteroatom unterbrochen sein kann oder eine Cycloalkylen-Gruppe mit mindestens einer Verzweigung, wobei die Cycloalkylen-Gruppe 4 bis 20, bevorzugt 5 bis 15 Kohlenstoffatome aufweist, gegebenenfalls durch mindestens ein Heteroatom unterbrochen sein kann und wobei die Cycloalkylen-Gruppe gegebenenfalls mehrere Cyclen enthalten kann steht,

y jeweils unabhängig voneinander für die chemische Formel (IIIa) oder (IIIb) steht

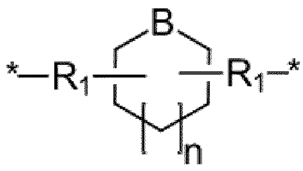

(IIIa)

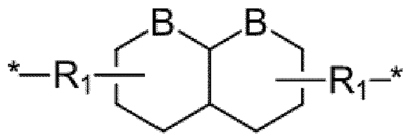

(IIIb)

,

in denen

B jeweils unabhängig voneinander für eine $CH_2$-Gruppe oder ein Heteroatom, welches ausgewählt ist aus der Gruppe, bestehend aus O und S, bevorzugt eine $CH_2$-Gruppe oder ein Sauerstoffatom, steht,

$R_1$ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht,

n eine Zahl zwischen 0 und 3, bevorzugt 0 oder 1 ist und

$$0 < x < 1,$$

wobei die * jeweils die Position angeben, an der die chemischen Formeln ins Polyestercarbonat eingebunden sind,

dadurch gekennzeichnet, dass das Polyestercarbonat

98 mol-% bis 75 mol-%, bevorzugt 97 mol-% bis 80 mol-%, insbesondere bevorzugt 96 mol-% bis 82 mol-% der Struktureinheit (A) und

2 mol-% bis 25 mol-%, bevorzugt 3 mol-% bis 20 mol %, insbesondere bevorzugt 4 mol-% bis 18 mol-% der Struktureinheit (B),

jeweils bezogen auf die Summe der Struktureinheiten (A) und (B), umfasst und

dass das Polyestercarbonat eine relative Lösungsviskosität, gemessen in Dichlormethan bei einer Konzentration von 5 g/l bei 25 °C mit einem Ubbelohdeviskosimeter, von 1,20 bis 1,70, bevorzugt 1,23 bis 1,67, insbesondere bevorzugt 1,25 bis 1,65 aufweist.

2. Polyestercarbonat nach Anspruch 1, dadurch gekennzeichnet, dass das Polyestercarbonat zu mindestens 80 Gew.-%, bevorzugt 85 Gew.-%, besonders bevorzugt 90 Gew.-% aus der Strukturformel (1) besteht, bezogen auf das Gesamtgewicht des Polyestercarbonats.

3. Polyestercarbonat nach einem der Ansprüche 1 oder 2, dadurch gekennzeichnet, dass das Polyestercarbonat die folgenden Wiederholungseinheiten (i) bis (iv) in beliebiger Reihenfolge umfasst

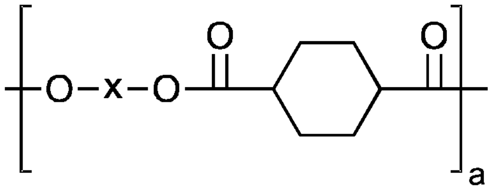

(i)

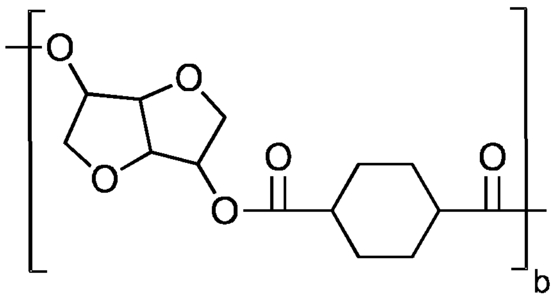

(ii)

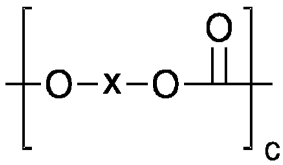

(iii)

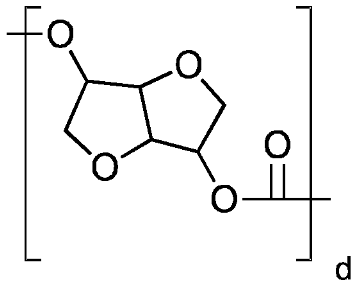

(iv)

in denen a, b, c und d jeweils unabhängig voneinander für eine natürliche Zahl stehen, welche jeweils die mittlere Anzahl an Wiederholungseinheiten angibt.

4. Polyestercarbonat nach einem der Ansprüche 1 bis 3, dadurch gekennzeichnet, dass 1 mol-% bis 20 mol-%, bevorzugt 2 mol-% bis 18 mol %, insbesondere bevorzugt 3 mol-% bis 15 mol-% des Polyestercarbonats aus dem Strukturmotiv *-x-O-* besteht, bezogen auf die gesamte Summe der folgenden Strukturmotive *-x-O-*,

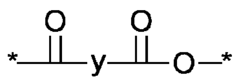 und 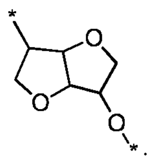.

5. Polyestercarbonat nach einem der Ansprüche 1 bis 4, dadurch gekennzeichnet, dass *-x-* ausgewählt wird aus der Gruppe, bestehend aus 2,2-bis(4-cyclohexylen)propan, 2-Butyl-2-ethyl-1,3-propylen, 2,2,4,4-Tetramethyl-1,3-cyclobutylen, 2,2,4-Trimethyl-1,3-pentylen, 2,2-Dimethylpropan-1,3-ylen, 8-(Methylen)-3-tricyclo[5.2.1.02,6]decanyl] methylen und beliebigen Mischungen daraus.

6. Polyestercarbonat nach einem der Ansprüche 1 bis 5, dadurch gekennzeichnet, dass y ausgewählt ist aus der Gruppe, bestehend aus 1,4-Cyclohexylen, 1,3-Cyclohexylen, 1,2-Cyclohexylen, Tetradihydro-2,5-furanylen, Tetradihydro-2,5-dimethyl-furanylen, Decahydro-2,4-naphtalinylen, Decahydro-2,5-naphtalinylen, Decahydro-2,6-naphtalinylen und Decahydro-2,7-naphtalinylen.

7. Polyestercarbonat nach einem der Ansprüche 1 bis 6, dadurch gekennzeichnet, dass das molare Verhältnis der Summe der Strukturmotive *-x-O-* und

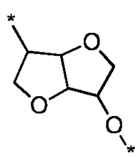

zum Strukturmotiv

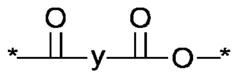

6:4 bis 9:1 ist.

8. Polyestercarbonat nach einem der Ansprüche 1 bis 7, dadurch gekennzeichnet, dass mindestens 45 mol-%, bevorzugt mindestens 50 mol-% des Polyestercarbonats aus dem Strukturmotiv

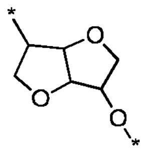

besteht, bezogen auf die gesamte Summe der folgenden Strukturmotive *-x-O-*

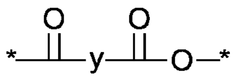 und 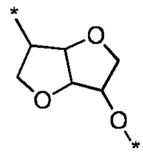.

9. Formmasse enthaltend ein Polyestercarbonat gemäß einem der Ansprüche 1 bis 8.

10. Formkörper enthaltend ein Polyestercarbonat gemäß einem der Ansprüche 1 bis 8.

11. Verfahren zur Herstellung eines Polyestercarbonats nach einem der Ansprüche 1 bis 8 mittels Schmelzeumesterung, umfassend die Schritte

(i) Reaktion zumindest mindestens einer Dicarbonsäure der chemischen Formel (IIa) oder (IIb)

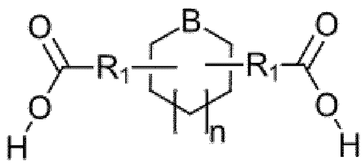

(IIa)

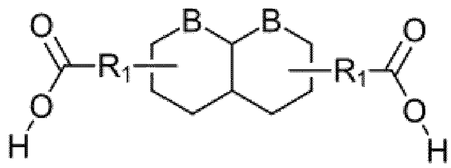

(IIb) ,

worin

B jeweils unabhängig voneinander für eine $CH_2$-Gruppe oder ein Heteroatom, welches ausgewählt ist aus der Gruppe, bestehend aus O und S, bevorzugt eine $CH_2$-Gruppe oder ein Sauerstoffatom, steht,

$R_1$ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht und

n eine Zahl zwischen 0 und 3, bevorzugt 0 oder 1 ist,
mit mindestens einem Diarylcarbonat unter Verwendung mindestens eines Katalysators und in Anwesenheit einer Mischung aus Dihydroxy-Verbindungen, umfassend (A) mindestens ein 1,4:3,6-Dianhydrohexitol und (B) mindestens eine weitere aliphatische Dihydroxyverbindung der chemischen Formel (I)

HO-X-OH (I),

in der X für eine verzweigte Alkylen-Gruppe mit 4 bis 20, bevorzugt 5 bis 15 Kohlenstoffatomen, welche gegebenenfalls durch mindestens ein Heteroatom unterbrochen sein kann oder eine Cycloalkylen-Gruppe mit mindestens einer Verzweigung, wobei die Cycloalkylen-Gruppe 4 bis 20, bevorzugt 5 bis 15 Kohlenstoffatome aufweist, gegebenenfalls durch mindestens ein Heteroatom unterbrochen sein kann und wobei die Cycloalkylen-Gruppe gegebenenfalls mehrere Cyclen enthalten kann, steht, und

(ii) weitere Aufkondensation des aus Verfahrensschritt (i) erhaltenen Gemisches zumindest unter Entfernung der bei der Kondensation abgespaltenen chemischen Verbindung,

dadurch gekennzeichnet, dass die Mischung aus Dihydroxy-Verbindungen

98 mol-% bis 75 mol-%, bevorzugt 97 mol-% bis 80 mol-%, insbesondere bevorzugt 96 mol-% bis 82 mol-% der Komponente (A) und

2 mol-% bis 25 mol-%, bevorzugt 3 mol-% bis 20 mol %, insbesondere bevorzugt 4 mol-% bis 18 mol-% der Komponente (B),

jeweils bezogen auf die Summe der Komponenten (A) und (B), umfasst.

12. Verfahren nach Anspruch 11, dadurch gekennzeichnet, dass das molare Verhältnis aller in Verfahrensschritt (i) anwesenden aliphatischen Dihydroxy-Verbindungen zu allen in Verfahrensschritt (i) anwesenden cycloaliphatischen Dicarbonsäuren vor der Reaktion in Verfahrensschritt (i) 1:0,6 bis 1:0,05 bevorzugt 1:0,55 bis 1:0,1, besonders bevorzugt 1:0,5 bis 1:0,15 beträgt.

13. Verfahren nach Anspruch 11 oder 12, dadurch gekennzeichnet, dass die mindestens eine weitere aliphatische Dihydroxy-Verbindung der chemischen Formel (I) ausgewählt wird aus der Gruppe, bestehend aus 2,2-bis(4-Hydroxycyclohexyl)propan, 2-Butyl-2-ethyl-1,3-propandiol, 2-(2-Hydroxyethoxy)ethanol, 2,2,4,4-Tetramethyl-1,3-cyclobutandiol, 2,2,4-Trimethyl-1,3-pentandiol, 2,2-Dimethylpropan-1,3-diol, 8-(Hydroxymethyl)-3-tricyclo [5.2.1.02,6]decanyl]methanol und beliebigen Mischungen daraus.

14. Verfahren nach einem der Ansprüche 11 bis 13, dadurch gekennzeichnet, dass die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure Decahydro-2,4-naphtalindicarbonsäure, Decahydro-2,5-naphtalindicarbonsäure, Decahydro-2,6-naphtalindicarbonsäure und Decahydro-2,7-naphtalindicarbonsäure.

15. Verfahren nach einem der Ansprüche 11 bis 14, dadurch gekennzeichnet, dass das mindestens eine Diarylcarbonat ausgewählt wird aus der Gruppe, bestehend aus einer Verbindung der Formel (2)

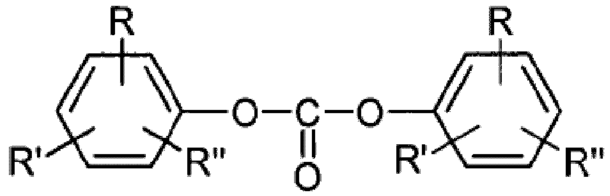

(2)

,

worin

R, R' und R" jeweils unabhängig voneinander gleich oder verschieden sein können und für Wasserstoff, gegebenenfalls verzweigtes C1-C34Alkyl, C7-C34-Alkylaryl, C6-C34-Aryl, eine Nitrogruppe, eine Carbonyl-enthaltende Gruppe, eine Carboxyl-enthaltende Gruppe oder eine Halogengruppe stehen.

## Patentansprüche

**1.** Polyestercarbonat, umfassend die Strukturformel (1)

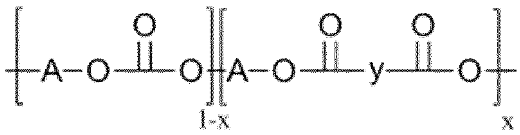

(1),

in der

A pro Wiederholungseinheit unabhängig voneinander zumindest entweder Struktureinheit (A) oder Struktureinheit (B) darstellt, wobei

(A) für die chemische Formel (2) steht

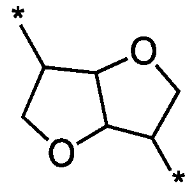

(2)

und
(B) für die chemische Formel (3) steht

*-x-* (3),

wobei x für eine verzweigte Alkylen-Gruppe mit 4 bis 20, bevorzugt 5 bis 15 Kohlenstoffatomen, welche gegebenenfalls durch mindestens ein Heteroatom unterbrochen sein kann oder eine Cycloalkylen-Gruppe mit mindestens einer Verzweigung, wobei die Cycloalkylen-Gruppe 4 bis 20, bevorzugt 5 bis 15 Kohlenstoffatome aufweist, gegebenenfalls durch mindestens ein Heteroatom unterbrochen sein kann und wobei die Cycloalkylen-Gruppe gegebenenfalls mehrere Cyclen enthalten kann steht,

y jeweils unabhängig voneinander für die chemische Formel (IIIa) oder (IIIb) steht

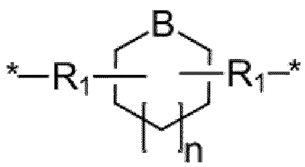

(IIIa)

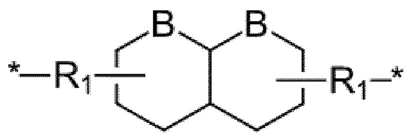

(IIIb)

,

in denen

B jeweils unabhängig voneinander für eine $CH_2$-Gruppe oder ein Heteroatom, welches ausgewählt ist aus der Gruppe, bestehend aus O und S, bevorzugt eine $CH_2$-Gruppe oder ein Sauerstoffatom, steht,
$R_1$ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht,
n eine Zahl zwischen 0 und 3, bevorzugt 0 oder 1 ist und

$$0 < x < 1,$$

wobei die * jeweils die Position angeben, an der die chemischen Formeln ins Polyestercarbonat eingebunden sind,
**dadurch gekennzeichnet, dass** das Polyestercarbonat
98 mol-% bis 75 mol-%, bevorzugt 97 mol-% bis 80 mol-%, insbesondere bevorzugt 96 mol-% bis 82 mol-% der Struktureinheit (A) und
2 mol-% bis 25 mol-%, bevorzugt 3 mol-% bis 20 mol %, insbesondere bevorzugt 4 mol-% bis 18 mol-% der Struktureinheit (B),
jeweils bezogen auf die Summe der Struktureinheiten (A) und (B), umfasst und

dass das Polyestercarbonat eine relative Lösungsviskosität, gemessen in Dichlormethan bei einer Konzentration von 5 g/l bei 25 °C mit einem Ubbelohdeviskosimeter, von 1,20 bis 1,70, bevorzugt 1,23 bis 1,67, insbesondere bevorzugt 1,25 bis 1,65 aufweist.

2. Polyestercarbonat nach Anspruch 1, **dadurch gekennzeichnet, dass** das Polyestercarbonat zu mindestens 80 Gew.-%, bevorzugt 85 Gew.-%, besonders bevorzugt 90 Gew.-% aus der Strukturformel (1) besteht, bezogen auf das Gesamtgewicht des Polyestercarbonats.

3. Polyestercarbonat nach einem der Ansprüche 1 oder 2, **dadurch gekennzeichnet, dass** das Polyestercarbonat die folgenden Wiederholungseinheiten (i) bis (iv) in beliebiger Reihenfolge umfasst

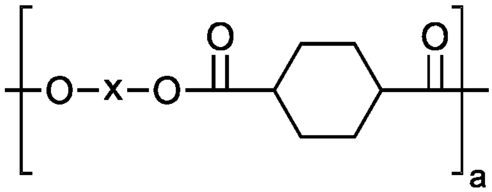

(i)

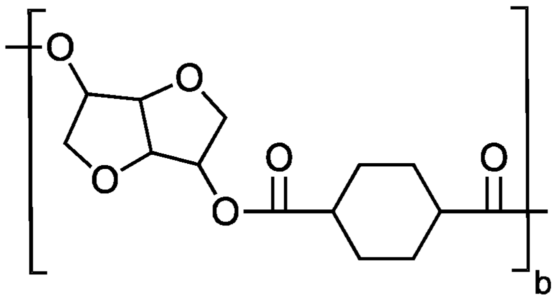

(ii)

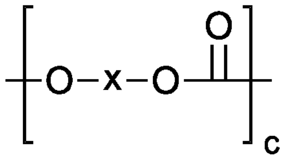

(iii)

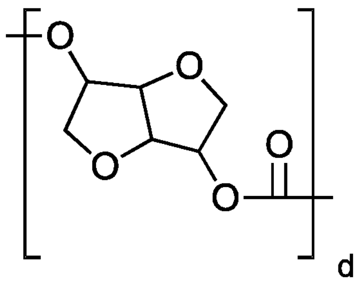

(iv)

in denen a, b, c und d jeweils unabhängig voneinander für eine natürliche Zahl stehen, welche jeweils die mittlere Anzahl an Wiederholungseinheiten angibt.

4. Polyestercarbonat nach einem der Ansprüche 1 bis 3, **dadurch gekennzeichnet, dass** 1 mol-% bis 20 mol-%, bevorzugt 2 mol-% bis 18 mol %, insbesondere bevorzugt 3 mol-% bis 15 mol-% des Polyestercarbonats aus dem Strukturmotiv *-x-O-* besteht, bezogen auf die gesamte Summe der folgenden Strukturmotive *-x-O-*,

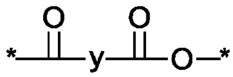 und 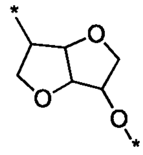.

5. Polyestercarbonat nach einem der Ansprüche 1 bis 4, **dadurch gekennzeichnet, dass** *-x-* ausgewählt wird aus der Gruppe, bestehend aus 2,2-bis(4-cyclohexylen)propan, 2-Butyl-2-ethyl-1,3-propylen, 2,2,4,4-Tetramethyl-1,3-cyclobutylen, 2,2,4-Trimethyl-1,3-pentylen, 2,2-Dimethylpropan-1,3-ylen, 8-(Methylen)-3-tricyclo[5.2.1.02,6]decanyl] methylen und beliebigen Mischungen daraus.

6. Polyestercarbonat nach einem der Ansprüche 1 bis 5, **dadurch gekennzeichnet, dass** y ausgewählt ist aus der Gruppe, bestehend aus 1,4-Cyclohexylen, 1,3-Cyclohexylen, 1,2-Cyclohexylen, Tetradihydro-2,5-furanylen, Tetradihydro-2,5-dimethyl-furanylen, Decahydro-2,4-naphtalinylen, Decahydro-2,5-naphtalinylen, Decahydro-2,6-naphtalinylen und Decahydro-2,7-naphtalinylen.

7. Polyestercarbonat nach einem der Ansprüche 1 bis 6, **dadurch gekennzeichnet, dass** das molare Verhältnis der Summe der Strukturmotive *-x-O-* und

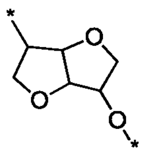

zum Strukturmotiv

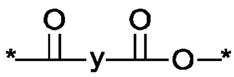,

6:4 bis 9:1 ist.

8. Polyestercarbonat nach einem der Ansprüche 1 bis 7, **dadurch gekennzeichnet, dass** mindestens 45 mol-%, bevorzugt mindestens 50 mol-% des Polyestercarbonats aus dem Strukturmotiv

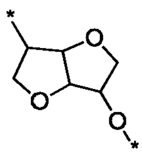

besteht, bezogen auf die gesamte Summe der folgenden Strukturmotive *-x-Q-*

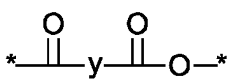 und 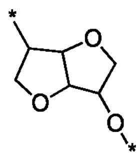.

9. Formmasse enthaltend ein Polyestercarbonat gemäß einem der Ansprüche 1 bis 8.

10. Formkörper enthaltend ein Polyestercarbonat gemäß einem der Ansprüche 1 bis 8.

11. Verfahren zur Herstellung eines Polyestercarbonats nach einem der Ansprüche 1 bis 8 mittels Schmelzeumesterung, umfassend die Schritte

(i) Reaktion zumindest mindestens einer Dicarbonsäure der chemischen Formel (IIa) oder (IIb)

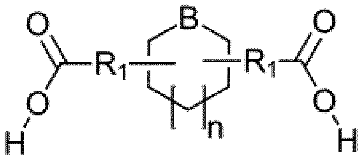

(IIa)

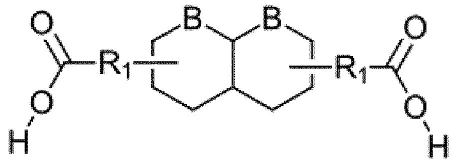

(IIb),

worin

B jeweils unabhängig voneinander für eine $CH_2$-Gruppe oder ein Heteroatom, welches ausgewählt ist aus der Gruppe, bestehend aus O und S, bevorzugt eine $CH_2$-Gruppe oder ein Sauerstoffatom, steht,
$R_1$ jeweils unabhängig voneinander für eine Einfachbindung oder eine Alkylengruppe mit 1 bis 10 Kohlenstoffatomen, bevorzugt eine Einfachbindung oder eine Alkylengruppe mit 1 bis 5 Kohlenstoffatomen, insbesondere bevorzugt eine Einfachbindung, steht und
n eine Zahl zwischen 0 und 3, bevorzugt 0 oder 1 ist,
mit mindestens einem Diarylcarbonat unter Verwendung mindestens eines Katalysators und in Anwesenheit einer Mischung aus Dihydroxy-Verbindungen, umfassend (A) mindestens ein 1,4:3,6-Dianhydrohexitol und (B) mindestens eine weitere aliphatische Dihydroxyverbindung der chemischen Formel (I)

HO-X-OH (I),

in der X für eine verzweigte Alkylen-Gruppe mit 4 bis 20, bevorzugt 5 bis 15 Kohlenstoffatomen, welche gegebenenfalls durch mindestens ein Heteroatom unterbrochen sein kann oder eine Cycloalkylen-Gruppe mit mindestens einer Verzweigung, wobei die Cycloalkylen-Gruppe 4 bis 20, bevorzugt 5 bis 15 Kohlenstoffatome aufweist, gegebenenfalls durch mindestens ein Heteroatom unterbrochen sein kann und wobei die Cycloalkylen-Gruppe gegebenenfalls mehrere Cyclen enthalten kann, steht, und

(ii) weitere Aufkondensation des aus Verfahrensschritt (i) erhaltenen Gemisches zumindest unter Entfernung der bei der Kondensation abgespaltenen chemischen Verbindung,

**dadurch gekennzeichnet, dass** die Mischung aus Dihydroxy-Verbindungen
98 mol-% bis 75 mol-%, bevorzugt 97 mol-% bis 80 mol-%, insbesondere bevorzugt 96 mol-% bis 82 mol-% der Komponente (A) und
2 mol-% bis 25 mol-%, bevorzugt 3 mol-% bis 20 mol %, insbesondere bevorzugt 4 mol-% bis 18 mol-% der Komponente (B),
jeweils bezogen auf die Summe der Komponenten (A) und (B), umfasst.

**12.** Verfahren nach Anspruch 11, **dadurch gekennzeichnet, dass** das molare Verhältnis aller in Verfahrensschritt (i) anwesenden aliphatischen Dihydroxy-Verbindungen zu allen in Verfahrensschritt (i) anwesenden cycloaliphatischen Dicarbonsäuren vor der Reaktion in Verfahrensschritt (i) 1:0,6 bis 1:0,05 bevorzugt 1:0,55 bis 1:0,1, besonders bevorzugt 1:0,5 bis 1:0,15 beträgt.

**13.** Verfahren nach Anspruch 11 oder 12, **dadurch gekennzeichnet, dass** die mindestens eine weitere aliphatische Dihydroxy-Verbindung der chemischen Formel (I) ausgewählt wird aus der Gruppe, bestehend aus 2,2-bis(4-Hydroxycyclohexyl)propan, 2-Butyl-2-ethyl-1,3-propandiol, 2-(2-Hydroxyethoxy)ethanol, 2,2,4,4-Tetramethyl-1,3-cyclobutandiol, 2,2,4-Trimethyl-1,3-pentandiol, 2,2-Dimethylpropan-1,3-diol, 8-(Hydroxymethyl)-3-tricyclo [5.2.1.02,6]decanyl]methanol und beliebigen Mischungen daraus.

**14.** Verfahren nach einem der Ansprüche 11 bis 13, **dadurch gekennzeichnet, dass** die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure Decahydro-2,4-naphtalindicarbonsäure, Decahydro-2,5-naphtalindicarbonsäure, Decahydro-2,6-naphtalindicarbonsäure und Decahydro-2,7-naphtalindicarbonsäure.

**15.** Verfahren nach einem der Ansprüche 11 bis 14, **dadurch gekennzeichnet, dass** das mindestens eine Diarylcarbonat ausgewählt wird aus der Gruppe, bestehend aus einer Verbindung der Formel (2)

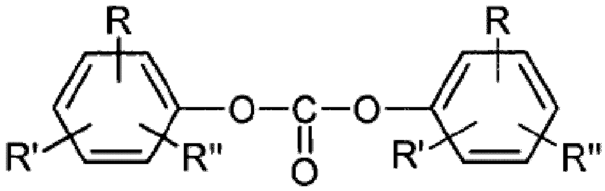

(2)

,

worin

R, R’ und R" jeweils unabhängig voneinander gleich oder verschieden sein können und für Wasserstoff, gegebenenfalls verzweigtes C1-C34Alkyl, C7-C34-Alkylaryl, C6-C34-Aryl, eine Nitrogruppe, eine Carbonyl-enthaltende Gruppe, eine Carboxyl-enthaltende Gruppe oder eine Halogengruppe stehen.

## Claims

**1.** Polyestercarbonate, comprising the structural formula (1)

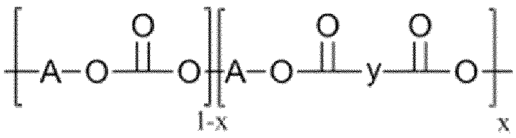

(1),

in which

A independently per repeating unit represents at least either structural unit (A) or structural unit (B), where

(A) represents chemical formula (2)

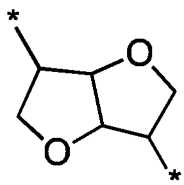

(2)

and

(B) represents chemical formula (3)

*-x-* (3),

where x represents a branched alkylene group having 4 to 20, preferably 5 to 15 carbon atoms, which may optionally be interrupted by at least one heteroatom, or a cycloalkylene group comprising at least one branch, wherein the cycloalkylene group has 4 to 20, preferably 5 to 15 carbon atoms, may optionally be interrupted by at least one heteroatom and wherein the cycloalkylene group may optionally contain a plurality of rings,

y each independently represents chemical formula (IIIa) or (IIIb)

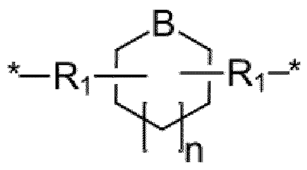 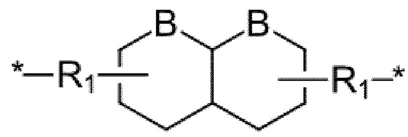

(IIIa) (IIIb)

,

in which B each independently represents a $CH_2$ group or a heteroatom selected from the group consisting of O and S, preferably a $CH_2$ group or an oxygen atom,
$R_1$ each independently represents a single bond or an alkylene group having 1 to 10 carbon atoms, preferably a single bond or an alkylene group having 1 to 5 carbon atoms, especially preferably a single bond,
n is a number between 0 and 3, preferably 0 or 1, and
$0 < x < 1$,

where the * in each case indicate the position at which the chemical formulae are incorporated into the polyestercarbonate,
**characterized in that** the polyestercarbonate comprises 98 mol% to 75 mol%, preferably 97 mol% to 80 mol%, especially preferably 96 mol% to 82 mol%, of structural unit (A) and
2 mol% to 25 mol%, preferably 3 mol% to 20 mol%, especially preferably 4 mol% to 18 mol%, of structural unit (B),
based in each case on the sum of the structural units (A) and (B), and
**in that** the polyestercarbonate has a relative solution viscosity, measured in dichloromethane at a concentration of 5 g/l at 25°C with an Ubbelohde viscometer, of 1.20 to 1.70, preferably 1.23 to 1.67, especially preferably 1.25 to 1.65.

2. Polyestercarbonate according to Claim 1, **characterized in that** the polyestercarbonate consists of structural formula (1) to an extent of at least 80% by weight, preferably 85% by weight, particularly preferably 90% by weight, based on the total weight of the polyestercarbonate.

3. Polyestercarbonate according to either of Claims 1 and 2, **characterized in that** the polyestercarbonate comprises the following repeating units (i) to (iv) in any order

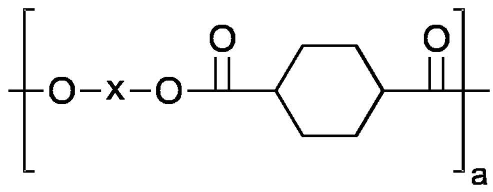

(i)

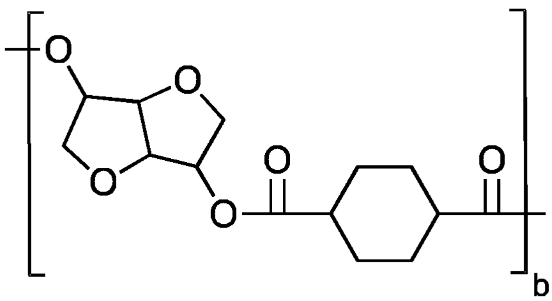

(ii)

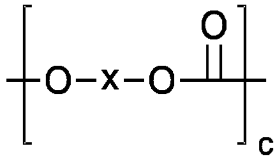

(iii)

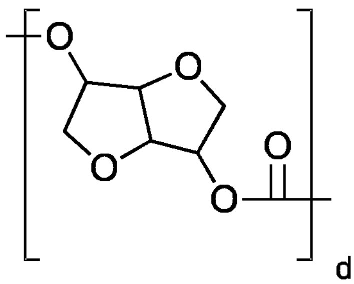

(iv)

in which a, b, c and d each independently represent a natural number which indicates the average number of repeating units in each case.

**4.** Polyestercarbonate according to any of Claims 1 to 3, **characterized in that** 1 mol% to 20 mol%, preferably 2 mol% to 18 mol%, especially preferably 3 mol% to 15 mol% of the polyestercarbonate consists of the structural motif *-x-Q-*, based on the total sum of the following structural motifs *-x-O-*,

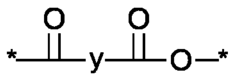 and 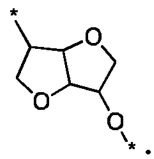.

**5.** Polyestercarbonate according to any of Claims 1 to 4, **characterized in that** *-x-* is selected from the group consisting of 2,2-bis(4-cyclohexylene)propane, 2-butyl-2-ethyl-1,3-propylene, 2,2,4,4-tetramethyl-1,3-cyclobutylene, 2,2,4-trimethyl-1,3-pentylene, 2,2-dimethylpropan-1,3-ylene, 8-(methylene)-3-tricyclo[5.2.1.02,6]decanyl]methylene and any desired mixtures thereof.

**6.** Polyestercarbonate according to any of Claims 1 to 5, **characterized in that** y is selected from the group consisting of 1,4-cyclohexylene, 1,3-cyclohexylene, 1,2-cyclohexylene, tetradihydro-2,5-furanylene, tetradihydro-2,5-dimethylfuranylene, decahydro-2,4-naphthalenylene, decahydro-2,5-naphthalenylene, decahydro-2,6-naphthalenylene and decahydro-2,7-naphthalenylene.

**7.** Polyestercarbonate according to any of Claims 1 to 6, **characterized in that** the molar ratio of the sum of the structural motifs *-x-O-* and

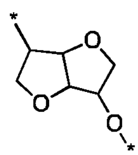

to the structural motif

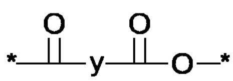

is 6:4 to 9:1.

**8.** Polyestercarbonate according to any of Claims 1 to 7, **characterized in that** at least 45 mol%, preferably at least 50 mol% of the polyestercarbonate consists of the structural motif

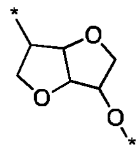

,

based on the total sum of the following structural motifs *-x-O-*,

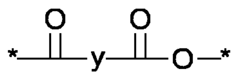

and

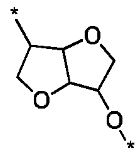

.

**9.** Molding compound comprising a polyestercarbonate according to any of Claims 1 to 8.

**10.** Molded article comprising a polyestercarbonate according to any of Claims 1 to 8.

**11.** Process for preparing a polyestercarbonate according to any of Claims 1 to 8 by means of melt transesterification, comprising the steps of

(i) reaction at least of at least one dicarboxylic acid of chemical formula (IIa) or (IIb)

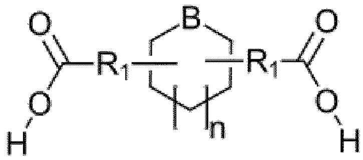

(IIa)

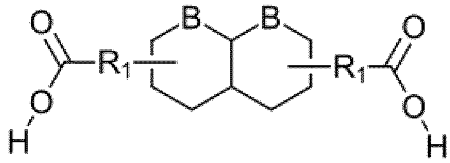

(IIb) ,

where

B in each case independently represents a $CH_2$ group or a heteroatom selected from the group consisting of O and S, preferably a $CH_2$ group or an oxygen atom,
$R_1$ in each case independently represents a single bond or an alkylene group having 1 to 10 carbon atoms, preferably a single bond or an alkylene group having 1 to 5 carbon atoms, more preferably a single bond, and
n is a number between 0 and 3, preferably 0 or 1,
with at least one diaryl carbonate using at least one catalyst and in the presence of a mixture of dihydroxy compounds, comprising (A) at least one 1,4:3,6-dianhydrohexitol and (B) at least one further aliphatic dihydroxy compound of chemical formula (I)

HO-X-OH (I),

in which X represents a branched alkylene group having 4 to 20, preferably 5 to 15 carbon atoms, which may optionally be interrupted by at least one heteroatom, or a cycloalkylene group comprising at least one branch, wherein the cycloalkylene group has 4 to 20, preferably 5 to 15 carbon atoms, may optionally be interrupted by at least one heteroatom and wherein the cycloalkylene group may optionally contain a plurality of rings,

and

(ii) further condensation of the mixture obtained from process step (i), at least with removal of the chemical compound eliminated in the condensation,

**characterized in that** the mixture of dihydroxy compounds comprises
98 mol% to 75 mol%, preferably 97 mol% to 80 mol%, especially preferably 96 mol% to 82 mol% of component (A) and
2 mol% to 25 mol%, preferably 3 mol% to 20 mol%, especially preferably 4 mol% to 18 mol% of component (B), based in each case on the sum of components (A) and (B).

**12.** Process according to Claim 11, **characterized in that** the molar ratio of all aliphatic dihydroxy compounds present in process step (i) to all cycloaliphatic dicarboxylic acids present in process step (i) prior to the reaction in process step (i) is 1:0.6 to 1:0.05, preferably 1:0.55 to 1:0.1, particularly preferably 1:0.5 to 1:0.15.

**13.** Process according to Claim 11 or 12, **characterized in that** the at least one further aliphatic dihydroxy compound of chemical formula (I) is selected from the group consisting of 2,2-bis(4-hydroxycyclohexyl)propane, 2-butyl-2-ethyl-1,3-propanediol, 2-(2-hydroxyethoxy)ethanol, 2,2,4,4-tetramethyl-1,3-cyclobutanediol, 2,2,4-trimethyl-1,3-pentanediol, 2,2-dimethylpropane-1,3-diol, 8-(hydroxymethyl)-3-tricyclo[5.2.1.02,6]decanyl]methanol and any desired mixtures thereof.

**14.** Process according to any of Claims 11 to 13, **characterized in that** the at least one cycloaliphatic dicarboxylic acid is selected from the group consisting of 1,4-cyclohexanedicarboxylic acid, 1,3-cyclohexanedicarboxylic acid, 1,2-cyclohexanedicarboxylic acid, tetradihydro-2,5-furandicarboxylic acid, tetradihydro-2,5-dimethylfurandicarboxylic acid, decahydro-2,4-naphthalenedicarboxylic acid, decahydro-2,5-naphthalenedicarboxylic acid, decahydro-2,6-naphthalenedicarboxylic acid and decahydro-2,7-naphthalenedicarboxylic acid.

**15.** Process according to any of Claims 11 to 14, **characterized in that** the at least one diaryl carbonate is selected from the group consisting of a compound of formula (2)

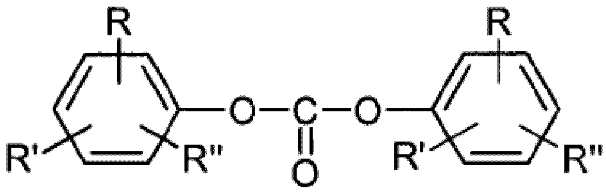

(2)

,

where
R, R' and R" may each independently be identical or different and represent hydrogen, optionally branched C1-C34 alkyl, C7-C34 alkylaryl, C6-C34 aryl, a nitro group, a carbonyl-containing group, a carboxyl-containing group or a halogen group.

## Revendications

**1.** Polyestercarbonate, comprenant la formule structurale (1)

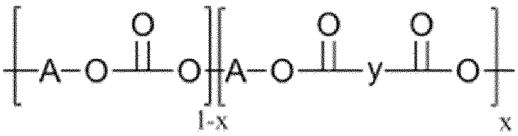

(1)

dans laquelle

A représente chaque fois indépendamment par unité répétitive au moins soit l'unité structurale (A), soit l'unité

structurale (B),

(A) représentant la formule chimique (2)

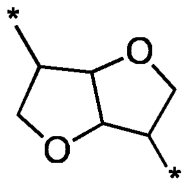

(2)

et
(B) représentant la formule chimique (3)

*-x-* (3)

où x représente un groupe alkylène ramifié ayant de 4 à 20, de préférence 5 à 15 atomes de carbone, qui peut éventuellement être interrompu par au moins un hétéroatome, ou un groupe cycloalkylène comportant au moins une ramification, le groupe cycloalkylène comportant de 4 à 20, de préférence 5 à 15 atomes de carbone, pouvant éventuellement être interrompu par au moins un hétéroatome et le groupe cycloalkylène pouvant éventuellement contenir plusieurs cycles,

y représente chaque fois indépendamment la formule chimique (IIIa) ou (IIIb) suivante

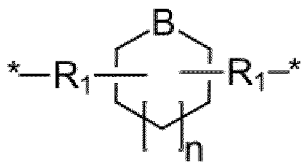

(IIIa)

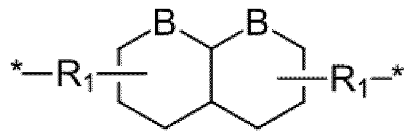

(IIIb)

,

formules dans lesquelles B représente chaque fois indépendamment les uns des autres un groupe $CH_2$ ou un hétéroatome qui est choisi dans le groupe constitué par O et S, de préférence un groupe $CH_2$ ou un atome d'oxygène, $R_1$ représente chaque fois indépendamment les uns des autres une liaison simple ou un groupe alkylène ayant de 1 à 10 atomes de carbone, de préférence une liaison simple ou un groupe alkylène ayant de 1 à 5 atomes de carbone, de façon particulièrement préférée une liaison simple,
n est un nombre compris entre 0 et 3, de préférence 0 ou 1 et

$$0 < x < 1,$$

les astérisques * indiquant chaque fois la position à laquelle les formules chimiques sont liées dans le polyestercarbonate
**caractérisé en ce que** le polyestercarbonate comprend
98 % en moles à 75 % en moles, de préférence 97 % en moles à 80 % en moles, de façon particulièrement préférée 96 % en moles à 82 % en mole de l'unité structurale (A) et
2 % en moles à 25 % en moles, de préférence 3 % en moles à 20 % en moles, de façon particulièrement préférée 4 % en moles à 18 % en moles, de l'unité structurale (B),
chaque fois par rapport à la somme des unités structurales (A) et (B), et
**en ce que** le polyestercarbonate présente une viscosité en solution, mesurée dans du dichlorométhane, à une concentration de 5 g/l, à 25 °C, à l'aide d'un viscosimètre Ubbelohde, de 1,20 à 1,70, de préférence 1,23 à 1,67, de façon particulièrement préférée 1,25 à 1,65.

**2.** Polyestercarbonate selon la revendication 1, **caractérisé en ce que** le polyestercarbonate est constitué à raison d'au

moins 80 % en poids, de préférence 85 % en poids, de façon particulièrement préférée 90% en poids, de la formule structurale (1), par rapport au poids total du polyestercarbonate.

3. Polyestercarbonate selon l'une quelconque des revendications 1 et 2, **caractérisé en ce que** le polyestercarbonate comprend les unités répétitives (i) à (iv) suivantes en un ordre quelconque

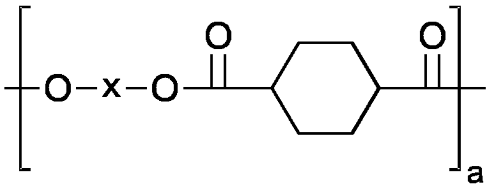
(i)

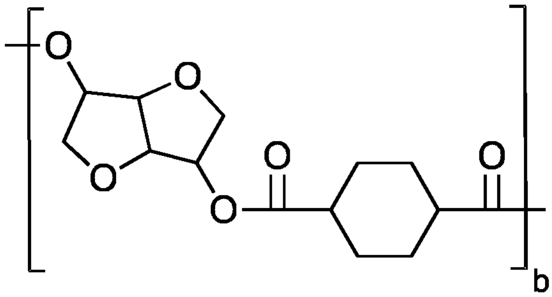
(ii)

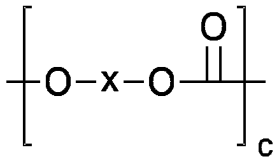
(iii)

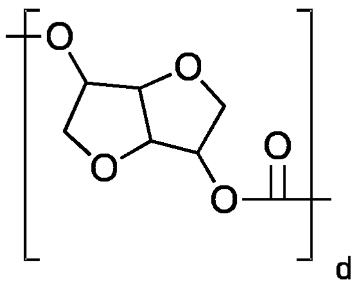
(iv)

dans lesquelles a, b, c et d représentent chacun indépendamment les uns des autres un nombre naturel qui indique chaque fois le nombre moyen d'unités répétitives.

4. Polyestercarbonate selon l'une quelconque des revendications 1 à 3, **caractérisé en ce que** 1 % en moles à 20 % en moles, de préférence 2 % en moles à 18 % en moles, de façon particulièrement préférée 3 % en moles à 15 % en moles du polyestercarbonate consistent en le motif structural *-x-O-*, par rapport à la somme totale des motifs structuraux *-x-O-*,

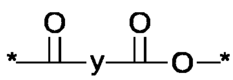

et

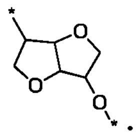

5. Polyestercarbonate selon l'une quelconque des revendications 1 à 4, caractérisé en ce *-x-* est choisi dans le groupe constitué par le 2,2-bis(4-cyclohexylène)propane, le 2-butyl-2-éthyl-1,3-propylène, le 2,2,4,4-tétraméthyl-1,3-cyclobutylène, le 2,2,4-triméthyl-1,3-pentylène, le 2,2-diméthylpropan-1,3-ylène, le 8-(méthylène)-3-tricyclo[5.2.1.02,6] décanyl]-méthylène et des mélanges de ceux-ci.

6. Polyestercarbonate selon l'une quelconque des revendications 1 à 5, **caractérisé en ce que** y est choisi dans le groupe constitué par le 1,4-cyclohexylène, le 1,3-cyclohexylène, le 1,2-cyclohexylène, le tétradihydro-2,5-furanylène, le tétradihydro-2,5-diméthyl-furanylène, le décahydro-2,4-naphtalinylène, le décahydro-2,5-naphtalinylène, le décahydro-2,6-naphtalinylène et le décahydro-2,7-naphtalinylène.

7. Polyestercarbonate selon l'une quelconque des revendications 1 à 6, **caractérisé en ce que** le rapport molaire de la somme des motifs structuraux *-x-O-* et

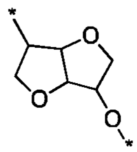

au motif structural

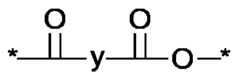

vaut de 6:4 à 9:1.

8. Polyestercarbonate selon l'une quelconque des revendications 1 à 7, **caractérisé en ce qu'**au moins 45 % en moles, de préférence au moins 50 % en moles du polyestercarbonate consistent en le motif structural

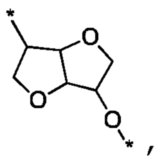

par rapport à la somme totale des motifs structuraux *-x-O-*,

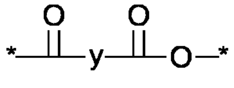 et 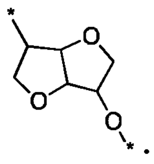

9. Matière à mouler contenant un polyestercarbonate selon l'une quelconque des revendications 1 à 8.

10. Corps moulé contenant un polyestercarbonate selon l'une quelconque des revendications 1 à 8.

11. Procédé pour la préparation d'un polyestercarbonate selon l'une quelconque des revendications 1 à 8 par transestérification en masse fondue, comprenant les étapes

(i) réaction au minimum d'au moins un acide dicarboxylique de formule chimique (IIa) ou (IIb)

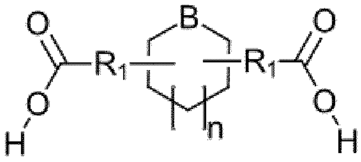

(IIa)

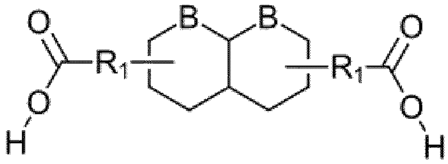

(IIb) ,

formules dans lesquelles

B représente chaque fois indépendamment les uns des autres un groupe $CH_2$ ou un hétéroatome qui est choisi dans le groupe constitué par O et S, de préférence un groupe $CH_2$ ou un atome d'oxygène,
$R_1$ représente chaque fois indépendamment les uns des autres une liaison simple ou un groupe alkylène ayant de 1 à 10 atomes de carbone, de préférence une liaison simple ou un groupe alkylène ayant de 1 à 5 atomes de carbone, de façon particulièrement préférée une liaison simple,
n est un nombre compris entre 0 et 3, de préférence 0 ou 1,
avec au moins un carbonate de diaryle, avec utilisation d'au moins un catalyseur et en présence d'un mélange de composés dihydroxylés, comprenant (A) au moins un 1,4:3,6-dianhydrohexitol et (B) au moins un autre composé dihydroxylé aliphatique de formule chimique (I)

HO-X-OH (I),

dans laquelle X représente un groupe alkylène ramifié ayant de 4 à 20, de préférence 5 à 15 atomes de carbone, qui peut éventuellement être interrompu par au moins un hétéroatome ou un groupe cycloalkylène comportant au moins une ramification, le groupe cycloalkylène comportant de 4 à 20, de préférence 5 à 15 atomes de carbone, pouvant éventuellement être interrompu par au moins un hétéroatome et le groupe cycloalkylène pouvant éventuellement contenir plusieurs cycles,

(ii) condensation plus poussée du mélange obtenu dans l'étape (i) du procédé, au moins avec élimination du composé chimique séparé lors de la condensation.

**caractérisé en ce que** le mélange de composés dihydroxylés comprend
98 % en moles à 75 % en moles, de préférence 97 % en moles à 80 % en moles, de façon particulièrement préférée 96 % en moles à 82 % en mole du composant (A) et
2 % en moles à 25 % en moles, de préférence 3 % en moles à 20 % en moles, de façon particulièrement préférée 4 % en moles à 18 % en moles, du composant(B)
chaque fois par rapport à la somme des composants (A) et (B).

**12.** Procédé selon la revendication 11, **caractérisé en ce que** le rapport molaire de tous les composés dihydroxylés aliphatiques présents dans l'étape (i) du procédé à tous les acides dicarboxyliques cycloaliphatiques présents dans l'étape (i) du procédé avant la réaction dans l'étape (i) du procédé vaut de 1:0,6 à 1:0,05, de préférence 1:0,55 à 1:0,1, de façon particulièrement préférée de 1:0,5 à 1:0,15.

**13.** Procédé selon la revendication 11 ou 12, **caractérisé en ce que** ledit au moins un autre composé dihydroxylé aliphatique de formule chimique (I) est choisi dans le groupe constitué par le 2,2-bis(4-hydroxycyclohexyl)-propane, le 2-butyl-2-éthyl-1,3-propanediol, le 2-(2-hydroxyéthoxy)éthanol, le 2,2,4,4-tétraméthyl-1,3-cyclobutanediol, le 2,2,4-triméthyl-1,3-pentanediol, le 2,2-diméthylpropane-1,3-diol, le 8-(hydroxyméthyl)-3-tricyclo[5.2.1.02,6]décanyl]méthanol et des mélanges de ceux-ci.

**14.** Procédé selon l'une quelconque des revendications 11 à 13, **caractérisé en ce que** ledit au moins un acide dicarboxylique cycloaliphatique est choisi dans le groupe constitué par l'acide 1,4-cyclohexanedicarboxylique, l'acide 1,3-cyclohexanedicarboxylique, l'acide 1,2-cyclohexanedicarboxylique, l'acide tétradihydro-2,5-furanedicarboxylique, l'acide tétradihydro-2,5-diméthyl-furanedicarboxylique, l'acide décahydro-2,4-naphtalènedicarboxylique, l'acide décahydro-2,5-naphtalènedicarboxylique, l'acide décahydro-2,6-naphtalènedicarboxylique et l'acide décahydro-2,7-naphtalènedicarboxylique.

**15.** Procédé selon l'une quelconque des revendications 11 à 14, **caractérisé en ce que** ledit au moins un carbonate de

diaryle est choisi dans le groupe constitué par un composé de formule (2)

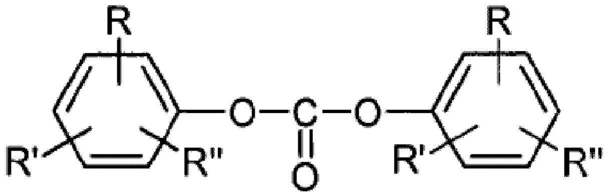

(2)

,

formules dans lesquelles

R, R' et R" peuvent être chacun indépendamment identiques ou différents les uns des autres et représentent un atome d'hydrogène, un groupe alkyle en $C_1$-$C_{34}$, alkylaryle en $C_7$-$C_{34}$, aryle en $C_6$-$C_{34}$, un groupe nitro, un groupe contenant un carbonyle, un groupe contenant un carboxy, ou un groupe halogéno.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20040092703 A1
- EP 3026074 A1
- EP 3248999 A1
- WO 2020085686 A1
- WO 2019093770 A1
- WO 2019147051 A1
- US 2009105393 A1
- WO 0132742 A1
- JP 4345616 A
- DE 2438053 A1
- EP 2019084847 W
- JP 2010077398 A


### In der Beschreibung aufgeführte Nicht-Patentliteratur


- **OH et al.** *Macromolecules*, 2013, vol. 46, 2930-2940
- **S. A. PARK et al.** *Polymer*, 2017, vol. 116, 153-159
- *CHEMICAL ABSTRACTS*, 1076-97-7
- *CHEMICAL ABSTRACTS*, 102-09-0
- *CHEMICAL ABSTRACTS*, 1122-58-3
- *CHEMICAL ABSTRACTS*, 652-67-5
- *CHEMICAL ABSTRACTS*, 1310-66-3
- *CHEMICAL ABSTRACTS*, 115-84-4
- *CHEMICAL ABSTRACTS*, 3010-96-6
- *CHEMICAL ABSTRACTS*, 144-19-4
- *CHEMICAL ABSTRACTS*, 126-30-7
- *CHEMICAL ABSTRACTS*, 110-63-4
- *CHEMICAL ABSTRACTS*, 105-08-8
- *CHEMICAL ABSTRACTS*, 5675-51-4